(19) Europäisches Patentamt
European Patent Office
Office européen des brevets

(11) EP 2 952 938 A1

(12) # EUROPEAN PATENT APPLICATION
published in accordance with Art. 153(4) EPC

(43) Date of publication:
**09.12.2015 Bulletin 2015/50**

(21) Application number: **14746753.4**

(22) Date of filing: **28.01.2014**

(51) Int Cl.:
***G02B 5/02*** (2006.01) ***B32B 7/02*** (2006.01)
***B32B 27/00*** (2006.01) ***B41M 5/00*** (2006.01)
***G09F 13/04*** (2006.01)

(86) International application number:
**PCT/JP2014/051818**

(87) International publication number:
**WO 2014/119561 (07.08.2014 Gazette 2014/32)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **29.01.2013 JP 2013014286**

(71) Applicant: **Fujifilm Corporation**
**Minato-ku**
**Tokyo 106-8620 (JP)**

(72) Inventors:
- **HOSODA, Hidemasa**
  **Fujinomiya-shi**
  **Shizuoka 418-8666 (JP)**
- **NOMURA, Tatsuya**
  **Fujinomiya-shi**
  **Shizuoka 418-8666 (JP)**
- **SHIMIZU, Takashi**
  **Fujinomiya-shi**
  **Shizuoka 418-8666 (JP)**

(74) Representative: **Hoffmann Eitle**
**Patent- und Rechtsanwälte PartmbB**
**Arabellastraße 30**
**81925 München (DE)**

(54) **DECORATIVE LIGHTING SHEET, DECORATIVE LIGHTING PRINTED MATERIAL AND METHOD FOR FABRICATING SAME, AND DECORATIVE LIGHTING SIGN**

(57) A sheet for illumination including a support, a mat layer which is arranged on one surface of the support, and an easily-adhesive layer which is arranged on the other surface of the support, in which a transmission value in percentage of image clarity in comb teeth with an interval of 2 mm and an image clarity value in percentage of reflection at 60° in comb teeth with an interval of 2 mm when an angle between a traveling direction of light and a normal of a sheet is set to be 60° satisfy (Transmission value in percentage of image clarity)/(image clarity value in percentage of reflection at 60°) ≥ 2, suppresses reflection of external light without degrading sharpness of a printed image.

Fig. 1

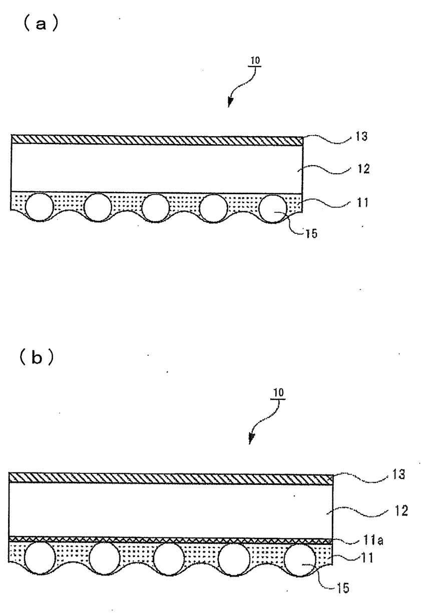


EP 2 952 938 A1

## Description

TECHNICAL FIELD

The present invention relates to a sheet for illumination, a printed matter for illumination, a method of producing a printed matter, and an illumination signboard.

BACKGROUND ART

An ink jet system that ejects an ink composition in a form of droplets from an ink ejection port is small and inexpensive, and used in many printers because of a capability of forming an image in a non-contact manner with respect to a recording medium. Among various ink jet systems, a piezo ink jet system which allows an ink to be ejected using deformation of a piezoelectric element and a thermal ink jet system which allows an ink composition in a form of droplets using a boiling phenomenon of the ink composition because of thermal energy have excellent high resolution and high-speed printing properties.

In recent years, not only photo printing or document printing for home or office but also printing for large-sized advertisement to be adhered to illumination signboards, show windows, station passages, or walls of buildings are performed using an ink jet printer. Accordingly, a sheet used for an illumination board prepared using an ink jet printer is frequently provided.

For example, Patent Document 1 suggests a light-diffusing sheet which includes a light-diffusing layer having a transparent resin, synthetic resin particles, and particles with a refractive index higher than that of the transparent resin and Patent Document 2 suggests a sheet for preparing a transmissive display plate which includes a light-diffusing layer and an ink jet recording layer. Both can be used for illumination boards.

CITATION LIST

PATENT DOCUMENTS

Patent Document 1: JP-A-6-59107
Patent Document 2: JP-11-273433

SUMMARY OF INVENTION

TECHNICAL PROBLEM

However, in the sheets of PTLs 1 and 2, since the haze thereof is largely increased, reflection of external light is reduced, but sharpness of a printed image is degraded. In addition, a known sheet for illumination "VIEWFUL UV TP-188" (manufactured by KIMOTO CO., LTD.) in the related art, which has low haze and is commercially available, has a characteristic in which external light is largely reflected although sharpness of a printed image is high. That is, in the related art, a sheet for illumination in which sharpness of a printed image and reflection of external light are simultaneously resolved at a high level has not been known.

The present invention has been made to solve the above-described problems and an object thereof is to provide a sheet for illumination, a printed matter for illumination, and a method of producing a printed matter for illumination in which reflection of external light is suppressed while sharpness of a printed image is not degraded.

SOLUTION TO PROBLEM

As a result of intensive research performed by the present inventors in order to solve the above-described problems, the present inventors found that reflection of external light can be suppressed without degrading sharpness of a printed image using a mechanism in which reflection of external light from the oblique direction is suppressed while sharpness of an image is improved by laminating an easily-adhesive layer, a support, and a mat layer in this order and satisfying a predetermined relationship between a transmission value (%) of image clarity in comb teeth with an interval of 2 mm and an image clarity value (%) of reflection at 60° in comb teeth with an interval of 2 mm when an angle between the traveling direction of light and a normal of a sheet is set to be 60°, thereby completing the present invention.

Specifically, the above-described problems are solved by the following solving means <1>, preferably <2> to <24>.

<1> A sheet for illumination including: a support; a mat layer which is arranged on one surface of the support; and an easily-adhesive layer which is arranged on the other surface of the support, in which a transmission value (%) of image clarity in comb teeth with an interval of 2 mm and an image clarity value (%) of reflection at 60° in comb teeth with an interval of 2 mm when an angle between the traveling direction of light and a normal of a sheet is set to be 60° satisfy the following relationship.

$$\text{Transmission value (\%) of image clarity/image clarity value (\%) of reflection at } 60° \geq 2$$

<2> The sheet for illumination according to <1>, in which a mat layer contains a silicon-containing resin, a matting agent, and a surfactant.

<3> The sheet for illumination according to <2>, in which the silicon-containing resin contains a condensate obtained by condensing a silane coupling agent.

<4> The sheet for illumination according to <3>, in which the silane coupling agent contains a tetrafunctional alkoxysilane and a trifunctional or bifunctional alkoxysilane, and the molar ratio of the tetrafunctional alkoxysilane to the trifunctional or bifunctional alkoxysilane is in a range of 25:75 to 85:15.

<5> The sheet for illumination according to any one of <2> to <4>, which satisfies the following inequation:

$$t < r$$

in which r is a volume average particle diameter of the matting agent and t is an average film thickness of the mat layer.

<6> The sheet for illumination according to any one of <1> to <5>, in which the mat layer contains inorganic fine particles, and the content of the inorganic fine particles is 20% or less.

<7> The sheet for illumination according to any one of <3> to <6>, in which the silane coupling agent contains a tetrafunctional alkoxysilane and a trifunctional alkoxysilane, and the molar ratio of the tetrafunctional alkoxysilane to the trifunctional alkoxysilane is in a range of 25:75 to 85:15.

<8> The sheet for illumination according to any one of <4> to <7>, in which the trifunctional alkoxysilane is an alkoxysilane including an epoxy group.

<9> The sheet for illumination according to any one of <4> to <8>, in which the trifunctional alkoxysilane is 3-glycidoxypropyltriethoxysilane.

<10> The sheet for illumination according to <1>, in which the mat layer contains a matting agent having a particle diameter of 0.4 4 $\mu$m to 3 $\mu$m and a binder, and a refractive index difference between the matting agent and the binder is 0.1 or less.

<11> The sheet for illumination according to any one of <1> to <10>, further including an intermediate layer between the support and the mat layer.

<12> The sheet for illumination according to any one of <1> to <11>, in which the haze value is in a range of 3% to 35%.

<13> The sheet for illumination according to any one of <1> to <12>, in which pencil hardness of the mat layer is F or higher.

<14> The sheet for illumination according to any one of <1> to <13>, in which a surface resistivity of the mat layer at a temperature of 23°C and at a relative humidity of 65% is $1.0 \times 10^{12}$ $\Omega$/sq or less.

<15> The sheet for illumination according to any one of <1> to <14>, in which the mat layer is disposed on a visual side.

<16> A method of producing a printed matter for illumination including: a process of ejecting an ink composition on the sheet for illumination according to any one of <1> to <15> using an ink jet recording device; and a process of irradiating the ejected ink composition with radiation and curing the ink composition.

<17> The method of producing a printed matter for illumination according to <16>, in which the ink composition is a radiation-curable ink composition.

<18> The method of producing a printed matter for illumination according to <17>, in which the ink composition is a solventless radiation-curable ink composition.

<19> The method of producing a printed matter for illumination according to any one of <16> to <18>, in which the ink jet recording device is a wide format ink jet printer system.

<20> A printed matter for illumination which is produced by the method of producing a printed matter for illumination according to any one of <16> to <19>.

<21> The printed matter for illumination according to <20> which is disposed such that the mat layer of the sheet for illumination according to any one of <1> to <15> is on a visual side.

<22> An illumination signboard including: the printed matter for illumination according to <20> or <21> and a light

source.
<23> The illumination signboard according to <22> which is disposed such that the mat layer of the sheet for illumination according to any one of <1> to <15> is on a visual side.

## ADVANTAGEOUS EFFECTS OF INVENTION

According to the present invention, it is possible to provide a sheet for illumination, a printed matter for illumination, and a method of producing a printed matter for illumination in which reflection of external light is suppressed while sharpness of a printed image is not degraded.

## BRIEF DESCRIPTION OF DRAWINGS

Fig. 1 is a sectional view schematically illustrating an example of a sheet for illumination according to the present invention.

## DESCRIPTION OF EMBODIMENTS

Hereinafter, the contents of the present invention will be described in detail. The description of the constituent elements described below will be made based on typical embodiments of the present invention, but the present invention is not limited to those embodiments. In addition, "to" between numerical values in the specification of the present application is used to include the numerical values before and after "to" as the lower limit and the upper limit.

Sheet for illumination:

A sheet for illumination of the present invention includes a support; a mat layer which is arranged on one surface of the support; and an easily-adhesive layer which is arranged on the other surface of the support, and a transmission value (%) of image clarity in comb teeth with an interval of 2 mm and an image clarity value (%) of reflection at 60° in comb teeth with an interval of 2 mm when an angle between the traveling direction of light and a normal of the sheet is set to be 60° satisfy the following relationship.

$$\text{Transmission value (\%) of image clarity/image clarity value (\%) of reflection at } 60^\circ \geq 2$$

The transmission value of the image clarity in comb teeth with an interval of 2 mm can be acquired using a method of evaluating image sharpness of transmission in conformity with JIS K 7374 and from the results of measurement using an image clarity measuring device (ICM-1T, manufactured by Suga Test Instruments Co., Ltd.) in the present application. The image clarity transmission value (%) measured using comb teeth with an interval of 2 mm can be acquired by irradiating a sheet 10 for illumination with light from a surface 11 side in a state in which printing is not performed and detecting the light transmitted through the sheet 10 for illumination. Specifically, the image clarity transmission value (%) is acquired such that the denominator is the total incident light quantity and the numerator is the quantity of light substantially straightly passing through the sheet, which is not affected by a blur of an image transmitted through the sheet for illumination.

Further, the image clarity value of reflection at 60° in comb teeth with an interval of 2 mm when an angle between the traveling direction of light and the sheet is set to be 60° can be acquired from the image clarity value measured using a device in which a detector detecting light that reflects the sheet 10 for illumination is incorporated in the comb teeth with an interval of 2 mm by setting the sheet such that the surface 11 is on an irradiation side of light for the angle between the traveling direction of incident light and a normal 103 of the sheet 10 for illumination to be 60° using the same measuring device. Specifically, the image clarity value is acquired such that the denominator is the total incident light quantity and the numerator is the total quantity of light traveling in a direction in which the numerator is reflected and substantially specular-reflected on the surface of the sheet for illumination. In addition, "60°" indicates that the angle is in the range of greater than 55° to smaller than 65° without requiring a precise angle. The error of 60° is preferably smaller than 4° and more preferably smaller than 3°.

In the sheet for illumination of the present invention, the transmission value (%) of image clarity in comb teeth with an interval of 2 mm and the image clarity value (%) of reflection at 60° in comb teeth with an interval of 2 mm when an angle between the traveling direction of light and a normal of the sheet for illumination is set to be 60° satisfy the relationship of "transmission value (%) of image clarity/image clarity value (%) of reflection at 60° ≥ 2," preferably satisfy the relationship of "transmission value (%) of image clarity/image clarity value (%) of reflection at 60° ≥ 2.5," and more

preferably satisfy "transmission value (%) of image clarity/image clarity value (%) of reflection at 60° ≥ 3."

Image visibility at the time when an image is printed on the rear surface is improved when the transmission value of the image clarity becomes larger, and reflection of external light can be reduced when the image clarity value of reflection at 60° becomes smaller. In general, since the image clarity value of reflection at 60° becomes increased when the transmission value of image clarity becomes larger, it is difficult to achieve the above-described ranges using techniques in the related art.

The reflection of external light can be suppressed by satisfying the above-described relationship without degrading the sharpness of a printed image.

Hereinafter, several embodiments of the sheet for illumination of the present invention will be described.

[First embodiment]

Fig. 1(a) is a sectional view illustrating an example of a sheet for illumination according to a first embodiment of the present invention. As illustrated in Fig. 1(a), a sheet 10 for illumination of the first embodiment of the present invention is formed by laminating a mat layer 11, a support 12, and an easily-adhesive layer 13, and the surface of the mat layer has certain unevenness. It is preferable that the mat layer 11 is a hard coat layer having hardness and scratch resistance. In this manner, it is possible to prevent the sheet 10 for illumination from being damaged. An image layer is formed by an ink composition being ejected onto the easily-adhesive layer 13. The easily-adhesive layer 13 improves adhesiveness between the support 12 and the image layer.

The mat layer includes a silicon-containing resin, a matting agent, and a surfactant. The silicon-containing resin contains a condensate obtained by condensing a silane coupling agent. In addition, the silane coupling agent contains a tetrafunctional alkoxysilane and a trifunctional or bifunctional alkoxysilane, and the molar ratio of the tetrafunctional alkoxysilane to the trifunctional or bifunctional alkoxysilane is in a range of 25:75 to 85:15. Moreover, an inequation of "$t < r$" is satisfied in a case where the volume average particle diameter of the matting agent is set as r and the average film thickness of the mat layer is set as t. In addition, the content of inorganic fine particles of the mat layer is 20% or less.

When the sheet for illumination of the present invention is configured in the above-described manner, it is possible to prevent the haze value from being extremely large. The haze value may be 35% or less, is preferably in the range of 3% to 30%, more preferably 6% to 30%, and still more preferably in the range of 6% to 20%.

Further, since the unevenness of the surface of the mat layer is in a certain range, the reflection direction of external light can be largely changed and reflection of external light can be suppressed.

(Mat layer)

It is preferable that the mat layer contains a silicon-containing resin, a matting agent, and a surfactant. The silicon-containing resin contains a condensate obtained by condensing a silane coupling agent, the silane coupling agent contains a tetrafunctional alkoxysilane and a trifunctional or bifunctional alkoxysilane, and the molar ratio of the tetrafunctional alkoxysilane to the trifunctional or bifunctional alkoxysilane is in a range of 25:75 to 85:15. In addition, the content of inorganic fine particles of the mat layer is 20% or less.

<Silane coupling agent>

It is preferable to use a water-soluble or water-dispersible material as the material used for a silane coupling agent. It is particularly preferable to use a water-soluble or water-dispersible material from a viewpoint of reducing environmental pollution caused by volatile organic compounds (VOC).

The silane coupling agent contains a tetrafunctional alkoxysilane and a trifunctional or bifunctional alkoxysilane. The trifunctional or bifunctional alkoxysilane may contain only one of a trifunctional alkoxysilane and a bifunctional alkoxysilane or a mixture of the trifunctional alkoxysilane and the bifunctional alkoxysilane. In the present invention, it is preferable that the silane coupling agent contains a trifunctional alkoxysilane and the molar ratio of the tetrafunctional alkoxysilane to the trifunctional alkoxysilane is in the range of 25:75 to 85:15.

The silane coupling agent includes hydrolysable groups such as a tetrafunctional alkoxysilane and a trifunctional or bifunctional alkoxysilane. A silanol is generated by the hydrolysable groups being hydrolyzed in an acidic aqueous solution and oligomers are generated by silanols being condensed.

<Trifunctional or bifunctional alkoxysilane>

The trifunctional or bifunctional alkoxysilane is a trifunctional or bifunctional alkoxysilane represented by the following formula (1).

$$R_{n+1}Si(OR^1)_{3-n} \qquad (1)$$

(Here, R represents an organic group which does not include an amino group and has 1 to 15 carbon atoms; $R^1$ represents an alkyl group having 4 or less carbon atoms such as a methyl group or an ethyl group; and n represents 0 or 1.)

Examples of preferable compounds from among a trifunctional or bifunctional alkoxysilane represented by the general formula (1) include vinyl trimethoxysilane, 3-methacryloxy propyl trimethoxysilane, 3-acryloxy propyl trimethoxysilane, 3-chloropropyl trimethoxysilane, 3-ureidopropyl trimethoxysilane, propyl trimethoxysilane, phenyl trimethoxysilane, 3-glycidoxy propyl triethoxysilane, 2-(3,4-epoxycyclohexyl)ethyl triethoxysilane, vinyl triethoxysilane, 3-methacryloxy propyl triethoxysilane, 3-acryloxy propyl triethoxysilane, 3-chloropropyl triethoxysilane, 3-ureidopropyl triethoxysilane, propyl triethoxysilane, phenyl triethoxysilane, 3-glycidoxy propyl methyl dimethoxysilane, 2-(3,4-epoxycyclohexyl)ethyl methyl dimethoxysilane, vinyl methyl dimethoxysilane, 3-methacryloxy propyl methyl dimethoxysilane, 3-acryloxy propyl methyl dimethoxysilane, chloropropyl methyl dimethoxysilne, propyl methyl dimethoxysilane, phenyl methyl dimethoxysilane, 3-glycidoxy propyl methyl diethoxysilane, 2-(3,4-epoxycyclohexyl)ethyl methyl diethoxysilane, vinyl methyl diethoxysilane, 3-methacryloxy propyl methyl diethoxysilane, 3-acryloxy propyl methyl diethoxysilane, chloropropyl methyl diethoxysilane, propyl methyl diethoxysilane, phenyl methyl diethoxysilane, 3-trimethoxysilylpropyl-2-[2-(methoxyethoxy)ethoxy]ethylurethane, 3-triethoxysilylpropyl-2-[2-(methoxyethoxy)ethoxy]ethylurethane, 3-tirmethoxysilylpropyl-2-[2-(methoxypropoxy)propoxy]propylurethane, 3-triethoxysilylpropyl-2-[2-(methoxypropoxy)propoxy] propylurethane, 3-glycidoxy propyl methyl dimethoxysilane, 3-glycidoxy propyl methyl diethoxysilane, 3-methacryloxy propyl methyl dimethoxysilane, 3-methacryloxy propyl methyl diethoxysilane, and 3-mercapto propyl methyl diethoxysilane.

Among these, a trialkoxysilane with n representing 0 is more preferable and examples thereof include 3-glycidoxy propyl trimethoxysilane, 3-glycidoxy propyl triethoxysilane, 3-chloropropyl trimethoxysilane, 2-(3,4-epoxycyclohexyl)ethyl trimethoxysilane, 3-ureido propyl triethoxysilane, 3-trimethoxysilylpropyl-2-[2-(methoxyethoxy)ethoxy] ethylurethane, and 3-trimethoxysilylpropyl-2-[2-(methoxypropoxy)propoxy]propylurethane.

As a commercially available product, KBE-403 (manufactured by Shin-Etsu Chemical Co., Ltd.) is exemplified.

The trifunctional or bifunctional alkoxysilane represented by the general formula (1) does not include an amino group as a functional group. That is, the trifunctional or bifunctional alkoxysilane includes an organic group R which does not have an amino group. In a case where R includes an amino group, when the amino group is mixed with a tetrafunctional alkoxysilane and the mixture is hydrolyzed, dehydration condensation is promoted in silanols to be generated. For this reason, a coating liquid for a mat layer becomes unstable, which is not preferable.

R in the general formula (1) may be an organic group which has 1 to 15 carbon atoms and has a molecular chain length. When the number of carbon atoms is 15 or less, the hardness can be sufficiently obtained without the flexibility of the mat layer becoming extremely large. In addition, the number of carbon atoms of R is more preferably in the range of 3 to 15 and still more preferably in the range of 5 to 13. When the number of carbon atoms of R is in the above-described range, a mat layer with improved brittleness can be obtained. Further, in a case where an intermediate layer is provided as described below, the adhesiveness between the intermediate layer and the mat layer can be improved.

Moreover, it is preferable that an organic group represented by R includes heteroatoms such as oxygen, nitrogen, and sulfur. When the organic group includes heteroatoms, the adhesiveness between the organic group and the intermediate layer can be further improved. Particularly, it is preferable that the organic group R includes an epoxy group, an amide group, a urethane group, a urea group, an ester group, a hydroxy group, a carboxyl group, and the like. Among these, the trifunctional or bifunctional alkoxysilane containing an epoxy group has an effect of improving stability of a silanol in acidic water, which is particularly preferable. In addition, the trifunctional or bifunctional alkoxysilane containing an epoxy group can provide suitable flexibility and sufficient hardness for the mat layer.

$R^1$ in the general formula (1) represents an alkyl group having 4 or less carbon atoms. It is particularly preferable that $R^1$ represents a methyl group or an ethyl group. When $R^1$ represents an alkyl group having 4 or less carbon atoms, hydrophilicity of the trifunctional or bifunctional alkoxysilane can be improved and hydrolysis in an aqueous solution can be promoted.

Further, n in the general formula (1) represents 0 or 1. The compound represented by the general formula (1) represents a trifunctional alkoxysilane in a case where n represents 0 and the compound represented by the general formula (1) represents a bifunctional alkoxysilane in a case where n represents 1. Moreover, the trifunctional alkoxysilane and the bifunctional alkoxysilane may be used in a mixture.

<Tetrafunctional alkoxysilane>

When a tetrafunctional alkoxysilane is used as a component of a coating liquid for a mat layer, the crosslinking density due to dehydration condensation of a silanol which is generated by hydrolysis of the tetrafunctional alkoxysilane and the trifunctional or bifunctional alkoxysilane in the general formula (1) is improved. When the crosslinking density

is improved, it is possible to provide sufficient hardness for the mat layer.

The tetrafunctional alkoxysilane is not particularly limited, but it is more preferable that the tetrafunctional alkoxysilane has 1 to 4 carbon atoms and particularly preferable that the tetrafunctional alkoxysilane is tetramethoxysilane or tetraethoxysilane. When the number of carbon atoms is 4 or less, the hydrolysis rate of the tetrafunctional alkoxysilane at the time of being mixed with acidic water does not become extremely slow and the time required for dissolution until the solution turns into a uniform aqueous solution becomes shorter. In this manner, the production efficiency can be improved.

As a commercially available product of the tetrafunctional alkoxysilane, KBE-04 (manufactured by Shin-Etsu Chemical Co., Ltd.) can be exemplified.

The molar ratio of the tetrafunctional alkoxysilane to the trifunctional or bifunctional alkoxysilane contained in the mat layer of the sheet for illumination of the present invention may be in the range of 25:75 to 85:15, preferably in the range of 30:70 to 80:20, more preferably in the range of 30:70 to 65:35, and still more preferably in the range of 45:55 to 65:35. When the molar ratio of the tetrafunctional alkoxysilane to the trifunctional or bifunctional alkoxysilane contained in the mat layer is in the above-described range, the degree of polymerization of the silane coupling agent can be controlled to be within a desired range. In this manner, reflection of external light can be prevented without increasing the haze.

<Matting agent>

As the matting agent, organic resin fine particles or inorganic fine particles can be exemplified. In the present invention, an agent having a primary particle diameter or a volume average particle diameter of the aggregate of 400 nm or greater is defined as a matting agent. It is preferable that the matting agent is formed of light-transmissive particles.

Examples of the matting agent include silica, calcium carbonate, magnesium carbonate, barium sulfate, aluminum oxide, polystyrene, a polystyrene-divinyl benzene copolymer, polymethyl methacrylate, crosslinked polymethyl methacrylate, a styrene-acryl copolymer, melamine, and benzoguanamine, and the matting agent may be used in a state in which the particles are aggregated. Preferably, at least one kind of particles selected from a group of melamine resin particles, hollow particles, polystyrene resin particles, styrene-acryl copolymer resin particles, polymethyl methacrylate, crosslinked polymethyl methacrylate, and silicone resin particles are used and an agent in which particles are present as primary particles is preferably used from a viewpoint of controlling the surface roughness thereof.

As a commercially available product, MX-150, MX-180, MX-80H3WT (all manufactured by Soken Chemical & Engineering Co., Ltd.), or Nippol UFN 1008 (manufactured by ZEON CORPORATION) are exemplified.

The matting agent may be used in a mixture of two kinds or more particles whose particle diameters are different from one another. Particularly, when a difference in volume average particle diameter between at least two kinds of particles from among two or more kinds of particles becomes greater than 1 μm, aggregation of particles is decreased. In this manner, the dispersibility of particles is improved and the appearance of the film surface becomes excellent.

In addition, the matting agent may use two or more kinds of particles whose materials are different from one another at the same time. For example, the appearance of the film surface can be improved by changing the refractive indices of respective particles.

A volume average particle diameter r of the matting agent is preferably in the range of 0.4 μm to 3.0 μm or less, more preferably in the range of 0.7 μm to 3.0 μm or less, and still more preferably in the range of 1.0 μm to 3.0 μm or less.

As illustrated in Fig. 1, the mat layer 11 holds a matting agent 15. It is preferable that the thickness of the mat layer 11 is determined by a relationship between the volume average particle diameter r of the matting agent 15 and the thickness of the mat layer 11. In addition, it is preferable that the range of the thickness is in the range of 0.4 μm to 3.0 μm.

As illustrated in Fig. 1, an inequation of "$t < r$" is satisfied in a case where the volume average particle diameter of the matting agent 15 is set as r and the average film thickness of the mat layer 11 is set as t. Since the volume average particle diameter r of the matting agent 15 is larger than the average film thickness t of the mat layer 11, the matting agent 15 protrudes so as to raise the surface of the mat layer 11. Further, the protrusion means that the surface of the matting agent is not necessarily exposed from the surface of the mat layer and the height (film thickness) of a particle portion is larger than the average film thickness. It is preferable that the surface of the matting agent 15 is covered by the mat layer 11 and the unevenness of the surface of the mat layer 11 is formed along the particle diameter of the matting agent 15. Moreover, it is preferable that a convex portion of the surface of the mat layer 11 is configured of the matting agent 15 at a density of 5 particles/$mm^2$ or more and preferably at a density of 20 particles/$mm^2$ or more. The reflection of external light can be effectively suppressed by setting r to be larger than t and forming unevenness on the surface of the mat layer 11.

The volume average particle diameter of the matting agent can be acquired by converting a circle conversion average particle diameter into a sphere which is obtained from an average value of a projected area (acquired with

respect to at least 100 particles or more) of a photo of a transmission type electron microscope (TEM). Moreover, the average film thickness t of the mat layer 11 can be acquired by preparing a coating liquid excluding only components of the mat agent, capturing a sectional image of a film using an SEM at scores to the extent that the average film thickness t can be measured without variation of the film thickness in the similar film formed by coating and drying a coating film, measuring the thicknesses of the respective portions, and averaging the value thereof. Further, in a case where the formulation of the coating film except the matting agent is the same, the amount of Si which is the main component of the present coating film is easily measured using fluorescent X-rays (PANALYTICAL, manufactured by AXIOS Corporation) and the film thickness can be proportionally calculated from a Si value of fluorescent X-rays of a film actually containing the matting agent based on the SEM film thickness of the similar film which is already evaluated and the Si measurement value of the fluorescent X-rays.

Further, in the present invention, in a case where the volume average particle diameter of the matting agent is set as r and the average film thickness of the matting layer is set as t, it is preferable that the relationship of "$r/4 \leq t < r$" is satisfied. When the relationship of "$r/4 \leq t < r$" is satisfied, a drop between a concave portion and a convex portion formed on the surface of the mat layer 11 can be adjusted to be within a constant range. In this manner, while the mat layer has unevenness necessary to suppress reflection of external light, the surface becomes smooth and the rear surface or the like during winding is unlikely to be damaged.

Moreover, since the pencil hardness of the mat layer in the first embodiment prevents the mat layer itself from being damaged, the pencil hardness thereof is preferably F or higher and more preferably H or higher.

In a case where 10 point average roughness of the surface of the mat layer is set as Rz, Rz is not particularly limited, but it is preferable that Rz is smaller than 1 μm. In addition, Rz is preferably in the range of 0.3 μm or more to 0.9 μm or less and more preferably in the range of 0.3 μm or more to 0.8 μm or less. When Rz is in the above-described range, it is possible to prevent another sheet adjacent to the mat layer from being damaged and to prevent the mat layer itself from being damaged while the reflection of external light is suppressed.

Further, $\sigma$ (Rz) indicating variation of Rz may be less than 0.1, preferably less than 0.08, and more preferably 0.05 or less. Moreover, $\sigma$ (Rz)/Rz may be less than 0.12, preferably 0.08 or less, and more preferably 0.05 or less. When $\sigma$ (Rz) or $\sigma$ (Rz)/Rz is within the above-described range, it is possible to prevent another sheet adjacent to the mat layer from being damaged and to prevent the mat layer itself from being damaged while the reflection of external light is suppressed.

<Inorganic fine particles>

As the inorganic fine particles, conductive metal fine particles or metal oxide fine particles can be exemplified. Examples of the metal include antimony, selenium, titanium, tungsten, tin, zinc, indium, and zirconia and examples of the metal oxide include antimony oxide, selenium oxide, titanium oxide, tungsten oxide, tin oxide, antimony-doped tin oxide (ATO (tin oxide doped with antimony)), phosphorus-doped tin oxide, zinc oxide, antimony zinc oxide, tin-doped indium oxide, and silica. Among these, it is preferable to use colloidal silica from a viewpoint of crosslinking with a silane coupling agent.

The colloidal silica is a colloid in which silicon dioxide or a hydrate thereof is dispersed in water and the average particle diameter of colloidal particles is in the range of 3 nm to 300 nm. The average particle diameter of the colloidal particles is preferably in the range of 4 nm to 50 nm, more preferably in the range of 4 nm to 40 nm, and particularly preferably in the range of 5 nm to 35 nm.

In addition, it is more preferable that pH of colloidal silica is adjusted to be in the range of 2 to 7 when the colloidal silica is added to a coating liquid for a mat layer. When the pH thereof is in the range of 2 to 7, stability of a silanol which is a hydrolyzate of an alkoxysilane is more excellent and an increase in the viscosity of the coating liquid due to rapid progression of the dehydration condensation reaction of the silanol can be further reliably suppressed compared to the case where the pH thereof is smaller than 2 or greater than 7.

20% or less of the inorganic fine particles are contained in the mat layer with respect to the solid mass except the matting agent. That is, it is preferable that the amount of the inorganic fine particles is 20% or less with respect to 100% of the hydrolysis condensate of the tetrafunctional alkoxysilane and the trifunctional or bifunctional alkoxysilane of the general formula (1). The inorganic fine particles may or may not be contained in the mat layer. The content of the inorganic fine particles may be 20% or less, more preferably 10% or less, and still more preferably 5% or less. When the content of the inorganic fine particles is in the above-described range, the unevenness on the surface of the edge portion of the matting agent which is to be formed when a coating film is cured can be expanded in a wide range and unevenness can be formed on the surface using a small amount of the matting agent.

<Surfactant>

The mat layer in the sheet for illumination of the present invention contains a surfactant. Examples of the

surfactant include known anionic, non-ionic, cationic, fluorine-based, and silicone-based surfactants. The surfactant is described in, for example, "Handbook of Surfactants" (edited by Ichiro Nishi, Ichiro Imai, and Masatake Kasai, Sangyo-Tosho Publishing Co., Ltd., published in 1960). Among these, an anionic surfactant and/or a cationic surfactant is preferably used.

Examples of the anionic surfactant include higher fatty acid salts such as potassium stearate and potassium behenate; alkyl ether carboxylates such as sodium POE lauryl ether carboxylate; N-acyl-L-glutamates such as N-stearoyl-L-glutamic acid monosodium salt; higher alkyl sulfate ester salts such as sodium lauryl sulfate and potassium lauryl sulfate; alkyl ether sulfate ester salts such as POE lauryl sulfate triethanolamine and sodium POE lauryl sulfate; N-acyl sarcosinates such as sodium lauryl sarcosine; higher fatty acid amide sulfonates such as sodium N-myristoyl-N-methyl taurine; alkyl phosphates such as sodium stearyl phosphate; alkyl ether phosphates such as sodium POE oleyl ether phosphate or sodium POE stearyl ether phosphate; sulfosuccinates such as sodium di-2-ethylhexyl sulfosuccinate, sodium monolauroyl monoethanolamide polyoxyethylene sulfosuccinate, or sodium lauyl polypropylene glycol sulfosuccinate; alkyl benzene sulfonates such as sodium linear dodecyl benzene sulfonate, linear dodecyl benzene, sulfonic acid triethanolamine, linear dodecyl benzene sulfonate, or dodecyl diphenyl ether disulfonate; higher fatty acid ester sulfate ester salts such as cured coconut oil fatty acid sodium glycerin sulfate.

Examples of the commercially available anionic surfactant include RAPISOL A-90, RAPISOL A-80, RAPISOL BW-30, RAPISOL B-90, RAPISOL C-70 (trade name, manufactured by NOR CORPORATION); NIKKOL OTP-100 (trade name, manufactured by NIKKO CHEMICAL CO., LTD.); Kohakuru ON, Kohakuru L-40, Phosphanol 702 (manufactured by Toho Chemical Industry Co., Ltd.); Beaulight A-5000, Beaulight SSS, and Sandeddo BL (manufactured by Sanyo Chemical Industries, Ltd.).

Examples of the cationic surfactant include alkyl trimethyl ammonium salts such as stearyl trimethyl ammonium chloride and lauryl trimethyl ammonium; dialkyl dimethyl ammonium salts such as distearyl dimethyl ammonium; alkyl pyridinium salts such as poly(N,N-dimethyl-3,5-methylene piperidinium) chloride and cetyl pyridinium chloride; alkyl quaternary ammonium salts, alkyl dimethyl benzyl ammonium salts, alkyl isoquinolinium salts, dialkyl Mori bromide salts, POE alkylamines, alkylamine salts, polyamine fatty acid derivatives, amyl alcohol fatty acid derivatives, benzalkonium chlorides, and benzethonium chloride. It is possible to suppress aggregation of particles during a process of drying a coating film and to form uniform unevenness on the surface using the above-described surfactant.

Examples of other commercially available products of the cationic surfactant include a phthalocyanine derivative (trade name, EFKA-745, manufactured by MORISHITA & CO., LTD.), organosiloxane polymer KP341 (manufactured by Shin-Etsu Chemical Co., Ltd.), (meth)acrylic acid (co)polymer polyflow No. 75, No. 90, No. 95 (manufactured by KYOEISHA CHEMICAL Co., LTD.), and WO01 (manufactured by Yusho Co., Ltd.).

Examples of the commercially available products of the non-ionic surfactant include Naroacty CL-95, HN-100 (trade name, manufactured by Sanyo Chemical Industries Co., Ltd.), LITHO REX BW400 (manufactured by KOKYU ALCOHOL KOGYO CO., LTD.), EMALEX ET-2020 (Nihon Emulsion Co., Ltd.), Unilube 50MB-26, and Nonion IS-4 (manufactured by NOF CORPORATION).

<Curing agent>

The coating liquid for the mat layer may contain a curing agent and the curing agent is preferably water-soluble. The curing agent accelerates formation of a siloxane bond by promoting the dehydration condensation of a silanol. Examples of the water-soluble curing agent include water-soluble inorganic acids, organic acids, organic acid salts, inorganic acid salts, a metal alkoxide, and a metal complex.

Preferable examples of the inorganic acids include boric acid, phosphoric acid, hydrochloric acid, nitric acid, and sulfuric acid. Preferable examples of the organic acids include acetic acid, formic acid, oxalic acid, citric acid, malic acid, and ascorbic acid. Preferable examples of the organic acid salts include aluminum acetate, aluminum oxalate, zinc acetate, zinc oxalate, magnesium acetate, magnesium oxalate, zirconium acetate, and zirconium oxalate. Preferable examples of the inorganic acid salts include aluminum chloride, aluminum sulfate, aluminum nitrate, zinc chloride, zinc sulfate, zinc nitrate, magnesium chloride, magnesium sulfate, magnesium nitrate, zirconium chloride, zirconium sulfate, and zirconium nitrate.

Preferable examples of a metal alkoxide include an aluminum alkoxide, a titanium alkoxide, and a zirconium alkoxide. Preferable examples of the metal complex include aluminum acetylacetonate, aluminum ethylacetoacetate, titanium acetylacetonate, and titanium ethylacetoacetate.

Among the above-described curing agents, a compound containing boron such as boric acid, phosphoric acid, an aluminum alkoxide, or aluminum acetylacetonate; a compound containing phosphorus; and a compound containing aluminum are particularly preferable from a viewpoint of water solubility and stability in water, and at least one kind from among these may be used as a curing agent.

Examples of the commercially available products of the curing agent include aluminum chelate A(W) (manufactured by Kawasaki Fine Chemicals Co., Ltd.).

It is preferable that the curing agent is uniformly mixed and dissolved in a coating liquid and also preferable that the curing agent is dissolved in water as a solvent of the coating liquid for the mat layer of the present invention in terms of securing transparency of a resin film. Since the curing agent is present in a form of a solid in a coating liquid in a case where the curing agent has low solubility in water, the curing agent remains as a foreign substance after coating and drying and transparency of the mat layer becomes low in some cases.
The amount of the curing agent is preferably in the range of 0.1% to 20%, more preferably in the range of 0.5% to 10%, and particularly preferably in the range of 0.5% to 8% with respect to 100% of an alkoxysilane containing a tetrafunctional alkoxysilane and a trifunctional or bifunctional alkoxysilane represented by the general formula (1).

<Antistatic agent>

The surface resistivity of the mat layer at a temperature of 23°C and a relative humidity of 65% is preferably $1.0 \times 10^{12}$ Ω/sq or less. When the surface resistivity thereof at a temperature of 23°C and a relative humidity of 65% is adjusted to be within the above-described range, it is possible to provide an antistatic function for an optical laminated film and to prevent adhesion of a foreign substance to the surface of the laminated film and an error due to scattering of an ink caused by charging by means of roll contact during the printing process.
Therefore, the surface resistivity of the mat layer at a temperature of 23°C and a relative humidity of 65% is preferably $1.0 \times 10^{12}$ Ω/sq or less and more preferably in the range of $1.0 \times 10^{8}$ Ω/sq to $1.0 \times 10^{12}$ Ω/sq or less.
In order to provide an antistatic function for the sheet for illumination, an ionic antistatic agent such as a cation, an anion, or a betaine may be added to a coating liquid for a mat layer, but fine particles formed of a metal oxide such as conductive tin oxide, indium oxide, zinc oxide, titanium oxide, magnesium oxide, or antimony oxide may be used in addition to or instead of the ionic antistatic agent. In addition, it is preferable that an intermediate layer is provided between a mat layer and a base material layer and a metal oxide such as conductive tin oxide, indium oxide, zinc oxide, titanium oxide, magnesium oxide, or antimony oxide is used. When a conductive metal oxide is used, it is possible to maintain a low resistance value even in a low humidity area whose surface resistance tends to be increased.
Examples of the commercially available products include FS-10D, SN-38F, SN-88F, SN-100F, TDL-S, and TDL-1 (all manufactured by Ishihara Sangyo Co., Ltd.).

<Other additives>

In order to control surface characteristics, particularly, a friction coefficient of the sheet for illumination, the coating liquid for a mat layer may contain a wax.
Examples of the wax include a paraffin wax, a microcrystalline wax, a polyethylene wax, a polyester-based wax, a carnauba wax, a fatty acid, a fatty acid amide, and a metal soap.
Further, as a curable component of the mat layer, acrylic monomers such as KAYARAD DPCA 20 (manufactured by Nippon Kayaku Co., Ltd.) or various multifunctional monomers may be used.
In order to cure these components, a curing method using thermal curing or radiation such as ultraviolet rays can be used and a commercially available polymerization initiator such as Irg 184 (manufactured by BASF Japan Ltd.) may be added.

(Intermediate layer)

As illustrated in Fig. 1(b), in the mat layer 11, an intermediate layer 11a may be further interposed between the mat layer 11 and the support 12 for the purpose of fixation to the support 12.
The intermediate layer 11a is generally formed by coating the other surface of the support 12 with a coating liquid formed of a binder, a curing agent, and a surfactant. An appropriate substance may be selected for a substance used for the intermediate layer 11a for the purpose of fixation of the matting agent 15 to the support 12. In addition, a binder itself may have self-crosslinking properties without using a curing agent.
The binder used for the intermediate layer is not particularly limited, but it is preferable that the binder is at least one of polyester, polyurethane, an acrylic resin, and a styrene butadiene copolymer from a viewpoint of adhesion force to the support. Further, the binder with water-soluble properties or water-dispersible properties is particularly preferable in terms of a small environmental load.
Polyester is a general term of a polymer whose main chain has an ester bond and can be generally obtained by a reaction between polycarboxylic acids and polyols. Examples of the polycarboxylic acid include fumaric acid, itaconic acid, adipic acid, sebacic acid, terephthalic acid, isophthalic acid, sulfoisophthalic acid, and naphthalene dicarboxylic acid and examples of the polyol include ethylene glycol, propylene glycol, glycerin, hexanetriol, butanediol, hexanediol, and 1,4-cyclohexanedimethanol. Polyester and the raw material thereof are described in "Handbook of Polyester Resin" (written by Eiichiro Takiyama, NIKKAN KOGYO SHIMBUN, LTD., published in 1988) and the description can be applied

to the present invention.

Further, examples of the polyester include polyhydroxy butyrate (PHB)-based, polycaprolactone (PCL)-based, polycaprolactone butylene succinate-based, polybutylene succinate (PBS)-based, polybutylene succinate adipate (PBSA)-based, polybutylene succinate carbonate-based, polyethylene terephthalate succinate-based, polybutylene adipate terephthalate-based, polytetramethylene adipate terephthalate-based, polybutylene adipate terephthalate-based, polyethylene succinate (PES)-based, polyglycolic acid (PGA)-based, and polylactic acid (PLA)-based materials, a carbonate copolymer of aliphatic polyester, and a copolymer of aliphatic polyester and polyamide. Examples of the commercially available products of polyester include Finetex ES650, ES2200 (manufactured by DIC Corporation), Vylonal MD1245, MD1400, MD1480 (manufactured by TOYOBO CO., LTD.), Pesurejin A-110, A-124GP, A-520, A-640 (manufactured by TAKEMATSU OIL & FAT CO., LTD.), Plascoat Z561, Z730, Z687, and Z592 (manufactured by GOO CHEMICAL CO., LTD.).

The polyurethane is a general term of a polymer whose main chain has a urethane bond and can be generally obtained by a reaction between polyisocyanates and polyols. Examples of the polyisocyanate include TDI (toluene diisocyanate), MDI (diphenylmethane diisocyanate), NDI (naphthalene diisocyanate), TODI (tolidine diisocyanate), HDI (hexamethylene diisocyanate), and IPDI (isophorone diisocyanate). Examples of the polyol include ethylene glycol, propylene glycol, glycerin, and hexanetriol. Further, as the isocyanate used in the present invention, a polymer whose molecular weight is increased by applying a chain extension treatment to the polyurethane polymer obtained by the reaction between polyisocyanates and polyols can be used. The above-described polyisocyanate, polyols, and chain extension treatment are described in, for example, "Handbook of Polyurethane" (edited by Keiji Iwata, NIKKAN KOGYO SHIMBUN, LTD., published in 1987). Examples of the commercially available products of polyurethane include Superflex 470, 210, 150HS, Erastron H-3 (manufactured by DKS Co., Ltd.), Hydran AP-20, AP-40F, WLS-210 (manufactured by DIC Corporation), Takelac W-5100, W-6061, and OLESTER UD-350 (manufactured by Mitsui Chemicals, Inc.).

An acrylic resin is a polymer formed of a polymerizable monomer having a carbon-carbon double bond, which is represented by an acrylic monomer or a methacrylic monomer. The polymer may be a homopolymer or a copolymer. Further, a copolymer of the polymer and another polymer (for example, polyester, polyurethane, and the like) is included. For example, a block copolymer or a graft copolymer can be exemplified. Alternatively, a polymer (a mixture of polymers in some cases) obtained by polymerizing a polymerizable monomer having a carbon-carbon double bond in a polyester solution or a polyester dispersion liquid is included. Similarly, a polymer (a mixture of polymers in some cases) obtained by polymerizing a polymerizable monomer having a carbon-carbon double bond in a polyurethane solution or a polyurethane dispersion liquid is also included. In the same manner, a polymer (a mixture of polymers in some cases) obtained by polymerizing a polymerizable monomer having a carbon-carbon double bond in another polymer solution or a dispersion liquid is also included. Further, in order to further improve adhesiveness, a hydroxyl group or an amino group can be included. Examples of the polymerizable monomer having a carbon-carbon double bond as a particularly typical compound, which is not particularly limited, include various carboxylic group-containing monomers such as acrylic acid, methacrylic acid, crotonic acid, itaconic acid, fumaric acid, maleic acid, and citraconic acid and salts thereof; various hydroxyl group-containing monomers such as 2-hydroxyethyl(meth)acrylate, 2-hydroxypropyl(meth)acrylate, 4-hydroxybutyl(meth)acrylate, monobutyl hydroxy fumarate, and monobutyl hydroxy itaconate; various (meth)acrylic acid esters such as methyl(meth)acrylate, ethyl(meth)acrylate, propyl(meth)acrylate, butyl(meth)acrylate, and lauryl(meth)acrylate; various nitrogen-containing compounds such as (meth)acrylamide, diacetone acrylamide, N-methyloyl acrylamide, and (meth)acrylonitrile; various styrene derivatives such as styrene, $\alpha$-methylstyrene, divinyl benzene, and vinyl toluene; various vinyl esters such as vinyl propionate; various silicon-containng polymerizable monomers such as $\gamma$-methacryloxy propyl trimethoxysilane, and vinyl trimethoxysilane; phosphorus-containing vinyl-based monomers; various halogenated vinyls such as vinyl chloride and vinylidene chloride; and various conjugated dienes such as butadiene. Examples of the commercially available products thereof include JURYMER ET-410 (manufactured by TOAGOSEI CO., LTD.) and EM-48D (manufactured by Daicel Corporation) which is an acrylic acid ester copolymer.

The intermediate layer can contain metal oxide particles expressing conductivity by means of electronic conduction. As the metal oxide particles, normal metal oxides can be used and examples thereof include ZnO, $TiO_2$, $SnO_2$, $Al_2O_3$, $In_2O_3$, MgO, BaO, $MoO_3$, and a composite oxide of these, or a metal oxide containing a small amount of different elements in addition to these metal oxides. Among such metal oxides, $SnO_2$, ZnO, $TiO_2$, and $In_2O_3$ are preferable and $SnO_2$ is particularly preferable. In place of the metal oxide particles expressing conductivity by means of electronic conduction, a $\pi$-electron conjugated conductive polymer such as a polythiophene-based polymer may be contained.

When one of the metal oxide particles expressing conductivity by means of electronic conduction and the $\pi$-electron conjugated conductive polymer is added to the intermediate layer, the surface resistance of the intermediate layer is adjusted to be $10^{12}$ $\Omega$/sq or less. In this manner, a laminated film can obtain sufficient antistatic properties and adsorption of dust or dirt can be prevented.

For the purpose of adjusting the refractive index of the intermediate layer, the intermediate layer may contain fine particles formed of a metal oxide. As the metal oxide, a metal oxide with a high refractive index such as tin oxide, zirconium oxide, zinc oxide, titanium oxide, cerium oxide, or niobium oxide is preferable. This is because even a small

amount of the metal oxide can change the refractive index as the refractive index thereof becomes higher. The particle diameter of fine particles of the metal oxide is preferably in the range of 1 nm to 50 nm and particularly preferably in the range of 2 nm to 40 nm. The amount of the fine particles of the metal oxide may be determined according to the target refractive index, but it is preferable that the fine particles of the metal oxide are contained in the intermediate layer such that the fine particles are in the range of 10% to 90% when a light-transmissive resin is set to 100% and particularly preferable that the fine particles of the metal oxide are contained in the intermediate layer such that the fine particles are in the range of 30% to 80%. Moreover, it is preferable that the intermediate layer has a refractive index of 1.4 to 1.8.

It is preferable that the intermediate layer has a thickness of 0.05 μm to 0.3 μm. It is possible to suppress interference unevenness generated due to a small change in the film thickness of the layer by adjusting the thickness of the intermediate layer to be 0.3 μm or less. Further, easily adhesive properties can be expressed by adjusting the thickness of the intermediate layer to be 0.05 μm or greater. In addition, the intermediate layer may partially hold a matting agent.

As illustrated in Fig. 1(b), in a case where the intermediate layer 11a is attached to the mat layer 11, the average film thickness t becomes the average film thickness of the mat layer 11. The volume average particle diameter r of the matting agent 15 becomes greater than the average film thickness t of the mat layer 11.

<Support>

As illustrated in Fig. 1(a), the support 12 is laminated on the mat layer 11. In addition, as illustrated in Fig. 1(b), the intermediate layer 11a may be provided between the support 12 and the mat layer 11. As illustrated in Figs. 1(a) and 1(b), the interface between the support 12 and the mat layer 11 or the intermediate layer 11a is flat.

A support is obtained by forming a polymer compound to have a film shape according to a melt film forming method or a solution film forming method. A transparent compound is used for the polymer compound used in the support. Examples of the support include polyethylene terephthalate (PET), polyethylene naphthalate (PEN), polybutylene terephthalate (PBT), polybutylene naphthalate (PBN), polyarylates, polyether sulfone, polycarbonate, polyether ketone, polysulfone, polyphenylene sulfide, a polyester-based liquid crystal polymer, triacetyl cellulose, a cellulose derivative, polypropylene, polyamides, polyimide, and polycycloolefins.

Among these, PET, PEN, triacetyl cellulose, and a cellulose derivative are more preferable and PET and PEN are particularly preferable.

Moreover, it is preferable that a biaxially oriented polymer film is used for the support. The biaxially oriented polymer film can be obtained by extending a long film-like polymer compound in two directions which are respectively orthogonal to the longitudinal direction and the width direction. In the present invention, biaxially oriented film-like PET and PEN are particularly preferably used as the support from viewpoints of elasticity and transparency.

Moreover, it is preferable to use a support in which at least one of one surface and the other surface of the support is subjected to a surface treatment such as a corona discharge treatment, a vacuum glow discharge treatment, or a flame treatment. One surface and/or the other surface of the support is hydrophilized by the surface treatment and thus wet properties of various aqueous coating liquids can be improved. Further, functional groups such as a carboxyl group and a hydroxy group can be introduced. In this manner, adhesion force of one surface of the support to the easily adhesive layer or the other surface of the support to the mat layer can be further improved.

It is preferable that the support has a thickness of 50 μm to 350 μm.

The refractive index varies depending on the material to be used, but it is preferable that the support has a refractive index of 1.40 to 1.80. When the refractive index is in the above-described range, a sheet showing excellent toughness as a base material and having excellent transparency can be obtained.

(Easily adhesive layer)

The easily adhesive layer is provided on a surface on the opposite side of the surface on the side in which the mat layer of the support is provided. The easily adhesive layer is provided on the surface on the opposite side of the mat layer 11 which is one surface of the support in order to improve the adhesiveness to an ink composition of the support and improve adhesion force to the ink composition. The easily adhesive layer may be one layer or may have a structure in which two or more layers are laminated. Further, the easily adhesive layer is also referred to as an ink receiving layer.

The easily adhesive layer is generally formed by coating one surface of the support with a coating liquid formed of a binder, a curing agent, and a surfactant. It is preferable that an appropriate substance is selected for a substance used for the easily adhesive layer for the purpose of improving the adhesion force to the ink composition. In addition, the easily adhesive layer may appropriately contain a crosslinking agent and organic or inorganic fine particles.

The binder used for the easily adhesive layer is not particularly limited, but it is preferable that the binder is at least one of polyester, polyurethane, an acrylic resin, a styrene butadiene copolymer, and a polyolefin resin from a

viewpoint of adhesion force. Further, the binder with water-soluble properties or water-dispersible properties is particularly preferable in terms of a small environmental load.

Polyester, polyurethane, an acrylic resin, and a styrene butadiene copolymer which are the same as those of the binder used in the above-described intermediate layer are preferably used.

Polyolefin is a polymer obtained by polymerizing an alkene such as ethylene, butylene, or propylene or may be a copolymer having the following structure. Hereinafter, these are collectively referred to as a polyolefin resin. Examples of such a polyolefine resin are as follows.

- A copolymer formed of ethylene or polypropylene, and an acrylic monomer or a methacrylic monomer
- A copolymer formed of ethylene or polypropylene and a carboxylic acid (including an anhydride)
- A copolymer formed of ethylene or polypropylene, an acrylic monomer or a methacrylic monomer, and a carboxylic acid (including an anhydride)

Specific preferable examples of the acrylic monomer or the methacrylic monomer constituting a polyolefin resin include methyl methacrylate, ethyl acrylate, butyl acrylate, and 2-hydroxyethyl acrylate.

Further, preferable examples of the carboxylic acid constituting a polyolefin resin include acrylic acid, methacrylic acid, itaconic acid, maleic acid, and a maleic anhydride. These may be used alone or in combination of plural kinds thereof.

The polyolefin resin may have a form of an aqueous polymer dispersion (so-called latex). Specific examples of the commercially available products include BONDINE HX-8210, HX-8290, TL-8030, LX-4110 (all manufactured by Sumitomo Chemical Co., Ltd.), Arrow base SA-1200, SB-1010, SE-1013N, SE-1200 (all manufactured by Unitika Ltd.), and Nippol UFN1008 (manufactured by ZEON CORPORATION).

The easily adhesive layer may contain a crosslinking agent. It is preferable that the crosslinking agent contained in the easily adhesive layer is at least one of an oxazoline-based compound and a carbodiimide-based compound.

[Oxazoline-based compound]

The oxazoline-based compound is a compound having an oxazoline group represented by the following formula (1).

[Chem. 1]

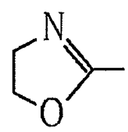

Formula (1)

As the oxazoline-based compound, a polymer having an oxazoline group, for example, a polymer obtained by copolymerizing a polymerizable unsaturated monomer having an oxazoline group and another polymerizable unsaturated monomer as needed according to a known method (for example, solution polymerization or emulsion polymerization) can be exemplified. Examples of the polymerizable unsaturated monomer having an oxazoline group include monomers containing 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, or 2-isopropenyl-5-methyl-2-oxazoline in a unit of a monomer. Further, these may be used in combination of two or more kinds thereof. In addition, examples of the commercially available products of the oxazoline-based compound include EPOCROS K-2020E, EPOCROS K2010E, EPOCROS K-2020E, EPOCROS K-2030E, EPOCROS WS-300, EPOCROS WS-500, and EPOCROS WS-700 (manufactured by NIPPON SHOKUBAI CO., LTD.).

[Carbodiimide-based compound]

A carbodiimide-based compound is a compound having a functional group represented by -N=C=N-. The polycarbodiimide is generally synthesized by a condensation reaction of organic diisocyanate, but an organic group of organic diisocyanate used for the synthesis is not particularly limited and one of an aromatic group and an aliphatic group or a mixture of these can be used. However, an aliphatic group is particularly preferable from a viewpoint of reactivity. As the raw materials of synthesis, an organic isocyanate, an organic diisocyanate, and an organic triisocyanate are used. As an example of the organic isocyanate, an aromatic isocyanate, an aliphatic isocyanate, and other mixtures can be used.

Specific examples thereof include 4,4'-diphenylmethane diisocyanate, 4,4-diphenyl dimethyl methane diisocyanate, 1,4-phenylene diisocyanate, 2,4-tolylene diisocyanate, 2,6-tolylene diisocyanate, hexamethylene diisocyanate, cyclohexane diisocyanate, xylylene diisocyanate, 2,2,4-trimethyl hexamethylene diisocyanate, 4,4'-dicyclohexyl methane diisocyanate, and 1,3-phenylene diisocyanate and examples of the organic monoisocyanate include isophorone isocyanate, phenyl isocyanate, cyclohexyl isocyanate, butyl isocyanate, and naphthyl isocyanate. Further, examples of the commercially available product of the carbodiimide-based compound include Carbodilite V-02-L2 (manufactured by Nisshinbo Holdings Inc.).

It is preferable that the crosslinking agent is added to a binder (resin) component in the range of 3% by mass or more to 30% by mass or less and more preferable that the crosslinking agent is added in the range of 3% by mass or more to 15% by mass or less. When the crosslinking agent is added thereto in the above-described range, the adhesion force to the support is further improved. When the content of the crosslinking agent is 3% by mass or greater with respect to the binder (resin) component, soaking of an ink in the ink receiving layer becomes excellent and ink adhesiveness immediately after an image is formed can be easily improved. When the content of the crosslinking agent is 30% by mass or less with respect to the polymer (resin) component, since the crosslinking reaction of the ink receiving layer is not excessively progressed and the hardness of the ink receiving layer does not become excessively high, the ink adhesiveness after a thermo treatment is performed can be easily improved. Further, when the amount of the crosslinking agent to be added exceeds 30% by mass, the cost thereof becomes excessively high.

The easily adhesive layer can contain metal oxide particles expressing conductivity by means of electronic conduction. As the metal oxide particles, normal metal oxides can be used and examples thereof include ZnO, $TiO_2$, $SnO_2$, $Al_2O_3$, $In_2O_3$, MgO, BaO, $MoO_3$, and a composite oxide of these, or a metal oxide containing a small amount of different elements in addition to these metal oxides. Among such metal oxides, $SnO_2$, ZnO, $TiO_2$, and $In_2O_3$ are preferable and $SnO_2$ is particularly preferable. In place of the metal oxide particles expressing conductivity by means of electronic conduction, a $\pi$-electron conjugated conductive polymer such as a polythiophene-based polymer may be contained.

When one of the metal oxide particles expressing conductivity by means of electronic conduction and the $\pi$-electron conjugated conductive polymer is added to the easily adhesive layer, the surface resistance of the easily adhesive layer is adjusted to be $10^{12}$ $\Omega$/sq or less. In this manner, the sheet for illumination can obtain sufficient antistatic properties and adsorption of dust or dirt can be prevented.

For the purpose of adjusting the refractive index of the easily adhesive layer, the easily adhesive layer may contain fine particles formed of a metal oxide. As the metal oxide, a metal oxide with a high refractive index such as tin oxide, zirconium oxide, zinc oxide, titanium oxide, cerium oxide, or niobium oxide is preferable. This is because even a small amount of the metal oxide can change the refractive index as the refractive index thereof becomes higher. The particle diameter of fine particles of the metal oxide is preferably in the range of 1 nm to 50 nm and particularly preferably in the range of 2 nm to 40 nm. The amount of the fine particles of the metal oxide may be determined according to the target refractive index, but it is preferable that the fine particles of the metal oxide are contained in the easily adhesive layer such that the fine particles are in the range of 10% to 90% when the easily adhesive layer is set to 100% and particularly preferable that the fine particles of the metal oxide are contained in the easily adhesive layer such that the fine particles are in the range of 30% to 80%.

The easily adhesive layer used as an ink receiving layer may contain a surfactant, a lubricant, an antifoaming agent, a foam suppressor, a dye, a fluorescent whitening agent, a preservative, a water-proofing agent, particles, or distilled water as needed in addition to a binder resin, a crosslinking agent, metal oxide particles, and a $\pi$-electron conjugated conductive polymer.

As the lubricant, an aliphatic wax or the like is preferably used.

Specific examples of the aliphatic wax include a vegetable wax such as a carnauba wax, a candelilla wax, a rice wax, a Japan wax, jojoba oil, a palm wax, a rosin-modified wax, an ouricury wax, a sugar cane wax, an esparto wax, or a bark wax; an animal wax such as a bees wax, lanolin, a whale wax, an insect wax, or a shellac wax; a mineral wax such as a montan wax, ozocerite, or a ceresin wax; a petroleum-based wax such as a paraffin wax, a microcrystalline wax, or a petrolactam wax; and a synthetic hydrocarbon-based wax such as a Fischer-Tropsch wax, a polyethylene wax, a polyethylene oxide wax, a polypropylene wax, or a polypropylene oxide wax. Among these, a carnauba wax, a paraffin wax, and a polyethylene wax are particularly preferable. These are preferably used as a water dispersion because of a small environmental load and excellent handleability. Examples of the commercially available product include CELLOSOL 524 (manufactured by CHUKYO YUSHI CO., LTD.).

The lubricant may be used alone or two or more kinds may be used in combination.

Examples of the preservative include sodium dehydroacetate, sodium benzoate, sodium pyridinethione-1-oxide, p-hydroxybenzoic acid ethyl ester, 1,2-benzothiazoline-3-one, sodium sorbate, and sodium pentachlorophenol.

The thickness of the easily adhesive layer can be controlled by adjusting the coating amount of the coating liquid that forms the easily adhesive layer. In order to improve the transparency and express excellent adhesion force, the thickness thereof is more preferably constant in the range of 0.01 $\mu$m to 5 $\mu$m. When the thickness thereof is adjusted to be 0.01 $\mu$m or greater, the adhesion force can be more reliably improved compared to the case where the thickness thereof is less than 0.01 $\mu$m. When the thickness thereof is 5 $\mu$m or less, an easily adhesive layer whose thickness is

more uniform can be formed compared to the case where the thickness thereof is greater than 5 μm. Further, it is possible to prevent the drying time from being prolonged by suppressing an increase in the amount of the coating liquid being used and to suppress an increase in the cost. The thickness of the easily adhesive layer is more preferably in the range of 0.02 μm to 3 μm. In addition, the easily adhesive layer may be formed by overlapping two or more layers within the above-described range of the thickness.

The thickness of the ink receiving layer at the time when the intermediate layer is provided is preferably in the range of 0.1 μm to 1 μm and more preferably in the range of 0.2 μm to 0.6 μm.

(Production method of first embodiment)

A method of producing the sheet for illumination of the first embodiment includes a process of forming a mat layer whose film thickness is t by coating the support with a coating liquid containing a silane coupling agent, a matting agent whose volume average particle diameter is r, and a surfactant. The silane coupling agent contains a tetrafunctional alkoxysilane and a trifunctional or bifunctional alkoxysilane, and the molar ratio of the tetrafunctional alkoxysilane to the trifunctional or bifunctional alkoxysilane is in a range of 25:75 to 85:15. Moreover, the relationship between r and t satisfies an inequation of "$t < r$." In addition, the content of inorganic fine particles in the coating liquid is 20% or less.

It is preferable that the coating liquid to be applied to the support contains a hydrolyzate to which low molecular weight condensation of a trifunctional or bifunctional alkoxysilane is applied. When the coating liquid contains a hydrolyzate to which low molecular weight condensation of a trifunctional or bifunctional alkoxysilane is applied, the degree of polymerization of the silane coupling agent can be controlled to be within a desired range. In this manner, reflection of external light can be prevented without increasing the haze.

The polycondensation reaction of the tetrafunctional alkoxysilane and a trifunctional or bifunctional alkoxysilane can be markedly controlled by hydrolyzing the trifunctional or bifunctional alkoxysilane in water at which the outside air temperature is controlled to be 30°C or lower under the condition of pH 2-7 and then hydrolyzing the tetrafunctional alkoxysilane under the same condition of the outside air temperature. Moreover, it is preferable that the obtained reaction solution is stored at a lower temperature. In this manner liquid stability with a long period of time is provided.

A condensate of the trifunctional or bifunctional alkoxysilane contained in the coating liquid is preferably in the range of 70% to 99% with respect to the solid mass excluding the matting agent. When the content of the condensate contained in the coating liquid is in the above-described range, the degree of polymerization of the silane coupling agent can be strictly controlled. In this manner, the hardness can be sufficiently provided while appropriate flexibility is provided for the mat layer. Further excellent scratch resistance can be obtained.

The process of forming a mat layer includes a step of hydrolyzing at least a part of a trifunctional or bifunctional alkoxysilane and then hydrolyzing a tetrafunctional alkoxysilane. It is preferable that at least a part of the hydrolysis of the trifunctional or bifunctional alkoxysilane is performed before the hydrolysis of the tetrafunctional alkoxysilane is performed and preferable that at least a part of the hydrolyzate of the trifunctional or bifunctional alkoxysilane is condensed before the hydrolyzate of the tetrafunctional alkoxysilane is condensed.

In the sheet for illumination of the first embodiment which is obtained by the above-described production method, since the degree of polymerization of the silane coupling agent is controlled to be in a desired range, the haze value is low and brightness is high. Further, since the unevenness on the surface of the mat layer is suppressed to be in a constant range, it is possible for the sheet to have unevenness necessary for suppressing reflection of external light and to have excellent scratch resistance.

[Second embodiment]

A second embodiment is the same as the first embodiment except that the mat layer contains a matting agent having a particle diameter of 0.4 μm to 3 μm and a binder and a refractive index difference between the matting agent and the binder is 0.1 or less. That is, the support, the intermediate layer, and the easily adhesive layer of the first embodiment can be used for a support, an intermediate layer, and an easily adhesive layer in a sheet for illumination of the second embodiment and the preferable ranges are the same as each other.

A difference in the refractive index between the matting agent and the binder is preferably 0.1 or less, more preferably 0.08 or less, and still more preferably 0.05 or less. When the difference in the refractive index is in the above-described range, the haze value can be adjusted not to be excessively large. The haze value of the mat layer may be 35% or less, preferably in the range of 3% to 30%, more preferably in the range of 6% to 30%, and still more preferably in the range of 6% to 20%.

(Mat layer)

It is preferable that the mat layer in the second embodiment includes a binder and a matting agent. It is preferable

to use a photocurable resin as the binder. In addition, a matting agent which is the same as the matting agent used in the first embodiment except that the particle diameter thereof is in the range of 0.4 μm to 3 μm can be used as the matting agent of the second embodiment and the preferable ranges are the same as each other. The matting layer of the second embodiment may contain inorganic fine particles, a surfactant, a curing agent, an antistatic agent, and other additives similar to the first embodiment. Further, additives described in JP-A-2012-189978 are preferably used.

The particle diameter of the matting agent used in the second embodiment is preferably in the range of 0.4 μm to 3 μm.

As a photocurable resin, a light-transmissive polymer having a saturated hydrocarbon chain or a polyether chain as a main chain is used. Further, it is preferable that a main binder polymer after curing has a crosslinking structure. As the binder polymer having a saturated hydrocarbon chain as a main chain after curing, a polymer obtained from an ethylenically unsaturated monomer selected from compounds of a first group to be described below is preferable. In addition, as a polymer having a polyether chain as a main chain, a polymer having an open ring of an epoxy-based monomer selected from compounds of a second group to be described below is preferable. In addition, a polymer obtained by mixing theses monomers can be considered. As the binder polymer having a saturated hydrocarbon chain of compounds of the first group as a main chain and having a crosslinking structure, a (co)polymer of a monomer having two or more ethylenically unsaturated groups is preferable. In order for the obtained polymer to have a high refractive index, it is preferable that the structure of the monomer contains at least one kind selected from an aromatic ring, a halogen atom, a sulfur atom, a phosphorus atom, and a nitrogen atom other than fluorine. Examples of the monomer which is used in a resin layer and has two or more ethylenically unsaturated groups include an ester of polyhydric alcohol and (meth)acrylic acid {for example, ethylene glycol di(meth)acrylate, 1,4-cyclohexane diacrylate, pentaerythritol tetra(meth)acrylate, pentaerythritol tri(meth)acrylate, trimethylol propane tri(meth)acrylate, trimethylol ethane tri(meth)acrylate, dipentaerythritol tetra(meth)acrylate, dipentaerythritol penta(meth)acrylate, dipentaerythritol hexa(meth)acrylate, pentaerythritol hexa(meth)acrylate, 1,2,3-cyclohexane tetramethacrylate, polyurethane polyacrylate, or polyester polyacrylate}, vinyl benzene, and a derivative thereof (for example, 1,4-divinyl benzene, 4-vinylbenzoate-2-acryloylethylester, or 1,4-divinylcyclohexanone), vinyl sulfone (for example, divinyl sulfone), and (meth)acrylamide (for example, methylene bisacrylamide).

The surface resistivity of the mat layer at a temperature of 23°C and a relative humidity of 65% is preferably $1.0 \times 10^{12}$ Ω/sq or less and more preferably in the range of $1.0 \times 10^{8}$ Ω/sq to $1.0 \times 10^{12}$ Ω/sq or less.

Since the pencil hardness of the mat layer in the second embodiment prevents the mat layer itself from being damaged, the pencil hardness thereof is preferably F or higher.

The thickness of the mat layer is preferably in the range of 0.4 μm to 3.0 μm, more preferably in the range of 0.7 μm to 3.0 μm, and still more preferably in the range of 0.8 μm to 3.0 μm.

The average film thickness t of the mat layer, in the relationship with the volume average particle diameter r of the matting agent, preferably satisfies a relationship of "$r/4 \leq t < r$," more preferably satisfies a relationship of "$r/3 \leq t < r$," and still more preferably satisfies a relationship of "$r/2 \leq t < r$." Since the volume average particle diameter r of the matting agent is greater than the average film thickness t of the mat layer, the matting agent protrudes from the surface of the mat layer. However, this does not mean that all of the matting agent protrudes. In addition, protrusion means that the height (film thickness) of a particle portion is greater than the average film thickness without the necessity of the surface of particles being exposed from the film surface. Moreover, the average film thickness t of the mat layer can be acquired by capturing a sectional image of a film using an SEM at scores to the extent that the average film thickness t can be measured without variation of the film thickness, measuring the thicknesses of the respective portions, and averaging the value thereof. At least, concave portions at a density of at least 1550 particles/mm$^2$ or more and preferably 3350 particles/mm$^2$ or more are formed using a matting agent.

(Production method of second embodiment)

A method of producing the sheet for illumination of a second embodiment is not particularly limited to the above-described production method. The sheet can be produced in the same manner as that of the first embodiment except that a process of coating a support with a coating liquid containing a matting agent and a binder, irradiating the support with radiation such as ultraviolet rays, and forming a mat layer is included.

Coating can be performed using a blade coater, an air knife coater, a roll coater, a bar coater, a gravure coater, or a reverse coater.

It is preferable that the sheets for illumination of the first and second embodiments are disposed such that the mat layer is on the visual side. That is, a light source is provided on an image layer side formed of an ink composition on the easily adhesive layer of the sheet for illumination and is visually recognized from the mat layer side. By forming the sheet in this manner, it is possible to suppress reflection of external light without degrading the sharpness of a printed image.

Method of producing printed matter for illumination

The method of producing the printed matter for illumination of the present invention includes a process of ejecting an ink composition onto the sheet for illumination of the present invention using an ink jet recording device and a process of irradiating the ejected ink composition with radiation and curing the ink composition.
The ink composition used in the present invention is not particularly limited as long as the ink composition is a known composition. It is preferable that the ink composition is a radiation-curable ink composition and particularly preferable that the ink composition is a solventless radiation-curable ink composition without containing a solvent in order for the ink composition to be cured after ejection onto the sheet for illumination of the present invention.
The radiation is not particularly limited as long as the radiation can provide energy that can generate initiating species in the ink composition by performing irradiation. The radiation includes $\alpha$ rays, $\gamma$ rays, X rays, ultraviolet rays, visible light, and electron beams. Among these, ultraviolet rays and electron beams are preferable from viewpoints of curing sensitivity and availability of a device and ultraviolet rays are particularly preferable. Accordingly, in the present invention, an ultraviolet-curable ink composition is preferable.
The radiation-curable ink composition can be referred to in the description of JP-A-2010-47015, JP-A-5-214280, and the like and the contents thereof are incorporated in the specification of the present application.
The solventless radiation-curable ink composition can be referred to in the description of JP-A-2004-131725, JP-A-2009-299057, and the like and the contents thereof are incorporated in the specification of the present application.
When the method of producing the printed matter of the present invention includes the above-described processes, an image layer is formed by the ink composition cured on the sheet for illumination, thereby forming a printed matter.
As the ink jet recording device which can be used in the present invention, a device including an ink supply system, a temperature sensor, and an active radiation source can be exemplified.
The ink supply system includes an original tank containing an ink composition, a supply pipe, an ink supply tank immediately before an ink jet head, a filter, and a piezo type ink jet head. The piezo type ink jet head can be driven such that multi-size dots preferably in the range of 1 pl to 100 pl and more preferably in the range of 8 pl to 30 pl can be ejected at a resolution of preferably 320 $\times$ 320 dpi to 4000 $\times$ 4000 dpi, more preferably 400 $\times$ 400 dpi to 1600 $\times$ 1600 dpi, and still more preferably 720 dpi $\times$ 720 dpi. In addition, "dpi" in the present invention indicates the number of dots per 2.54 cm.
Since it is desirable that the temperature of an ink such as the radiation-curable ink is adjusted to be constant when the ink is ejected, preferably, the ink jet recording device includes stabilizing means of the temperature of the ink composition. A piping system from an ink tank (intermediate tank when an intermediate tank is present) to a nozzle injection surface and an entire member becomes the target of a portion whose temperature is adjusted to be constant. That is, a portion from the ink supply tank to the ink jet head can be insulated and heated.
A method of controlling the temperature is not particularly limited, but it is preferable that a plurality of temperature sensors are provide in each of the pipe portions and perform heating control according to the ink flow rate and the ambient temperature. The temperature sensors can be provided in the vicinity of the ink supply tank and nozzles of the ink jet head. Further, it is preferable that a head unit to be heated is thermally blocked or insulated such that the device body is not affected by the temperature of the outside air. In order to shorten the starting-up time of the printer which is necessary for heating or to reduce loss of thermal energy, it is preferable to perform insulation with other portions and decrease the heat capacity of the entire heating unit.
It is preferable that ejection of the ink composition is performed using the above-described ink jet recording device after the ink composition is heated preferably in a temperature range of 25°C to 80°C and more preferably in the range of 25°C to 50°C and the viscosity of the ink composition is decreased preferably in the range of 3 mPa·s to 15 mPa·s and more preferably in the range of 3 mPa·s to 13 mPa·s. In the present invention, particularly, an ink composition whose viscosity of the ink at 25°C is 50 mPa·s or less is preferably used because ejection can be excellently performed. When this method is used, high ejection stability can be realized.
Since the viscosity of the radiation-curable ink composition is generally higher than that of an aqueous ink to be used for an ink for ink jet recording, viscosity variation due to temperature variation at the time of ejection is large. The viscosity variation of the ink composition affects a change in the size of a droplet and a change in the droplet ejection speed and causes degradation in image quality. Accordingly, it is preferable that the temperature of the ink composition at the time of ejection is maintained to be as constant as possible. Therefore, in the present invention, an appropriate control width of the temperature of the ink composition is preferably $\pm$5°C of a set temperature, more preferably $\pm$2°C of the set temperature, and still more preferably $\pm$1°C of the set temperature.
Further, it is preferable that the ink jet recording device using an ink jet recording device uses a wide format ink jet printer system. The wide format ink jet printer system is a system of applying radiation at substantially the same time when an ink composition is ejected from an ink jet recording device and curing the ejected ink composition. Further, with the wide format ink jet printer system, a large-sized printed matter can be prepared in a short period of time.
Next, the process of irradiating the ejected ink composition with radiation and curing the ink composition will

be described.

The ink composition ejected onto the sheet for illumination of the present invention is cured by irradiating the ink composition with radiation. This is because a radical polymerization initiator contained in the ink composition is decomposed by application of the radiation, radicals are generated, and then a polymerization reaction of a radical polymerizable compound is caused and accelerated by the radicals. At this time, when a radical polymerization initiator and a sensitizer are present together in the ink composition, the sensitizer in the system absorbs radiation so as to enter an excited state, and accelerates decomposition of the radical polymerization initiator by being in contact with the radical polymerization initiator, thereby achieving a curing reaction with high sensitivity.

Here, the peak wavelength of the radiation to be used, which depends on the absorption characteristics of a sensitizer is preferably in the range of 200 nm to 600 nm, more preferably in the range of 300 nm to 450 nm, and still more preferably in the range of 350 nm to 420 nm.

Further, the ink composition has sufficient sensitivity even in a case of low-output radiation. Accordingly, it is appropriate that the ink composition is cured with an exposure surface illumination of preferably 10 $mW/cm^2$ to 4000 $mW/cm^2$ and more preferably 20 $mW/cm^2$ to 2500 $mW/cm^2$.

A mercury lamp, gas or solid laser, or the like is mainly used for a radiation source, and a mercury lamp or a metal halide lamp is widely known as a light source to be used for curing an ink for UV photocurable ink jet recording. However, from a viewpoint of current environmental protection, mercury-free is strongly demanded and replacement with a GaN-based semiconductor UV light emitting device is extremely useful industrially and environmentally. Further, since an LED (UV-LED) and an LD (UV-LD) are small-sized, inexpensive, and highly efficient and have a long life, the LED and the LD are expected as a light source for photocurable ink jet recording.

Further, a light emitting diode (LED) and a laser diode (LD) can be used as a radiation source. Particularly, in a case where a UV light source is necessary, a UV-LED and a UV-LD can be used. For example, a UV LED having a wavelength whose main emission spectrum is in the range of 365 nm to 420 nm has been put on the market by Nichia Chemical Co., Ltd. Further, in a case where a shorter wavelength is required, the specification of US Patent No. 6084250 discloses an LED capable of emitting radiation centered in the range of 300 nm to 370 nm. In addition, another UV LED is available and radiation of a different UV bandwidth can be applied. In the present invention, a particularly preferable radiation source is a UV-LED and, specifically, a UV-LED having a peak wavelength of 350 nm to 420 nm is particularly preferable.

Moreover, the maximum illuminance on a recording medium of an LED is preferably in the range of 10 $mW/cm^2$ to 2000 $mW/cm^2$, more preferably in the range of 20 $mW/cm^2$ to 1000 $mW/cm^2$, and particularly preferably in the range of 50 $mW/cm^2$ to 800 $mW/cm^2$.

It is appropriate that the ink composition is irradiated with such radiation preferably for 0.01 seconds to 120 seconds and more preferably for 0.1 seconds to 90 seconds.

The conditions of irradiating an ink composition with radiation and basic methods of irradiating an ink composition with radiation are disclosed in JP-A-60-132767. Specifically, the ink composition is irradiated with radiation by providing light sources on both sides of a head unit including an ejection device of an ink and scanning the head unit and light sources using a so-called shuttle system. After the ink is impacted, the ink composition is irradiated with radiation after a constant time (preferably in the range of 0.01 seconds to 0.5 seconds, more preferably in the range of 0.01 seconds to 0.3 seconds, and still more preferably in the range of 0.01 seconds to 0.15 seconds) passes. By controlling the time from the impact to application of the ink to be minimum, it is possible to prevent the ink impacted on the recording medium from being blurred before the ink is cured. Further, since even a deep portion in which a light source cannot reach can be exposed before infiltration of the ink with respect to a porous recording medium, it is possible to prevent unreacted monomers from remaining, which is preferable.

Moreover, curing may be completed by another light source not accompanied by driving. Pamphlet of International Publication No. 99/54415 discloses a method of using optical fibers and a method of applying a collimated light source to a mirror surface provided on a side surface of a head unit and irradiating a recording unit with UV light as an irradiation method. In addition, such a curing method can be used for the method of producing a printed matter for illumination of the present invention.

It is preferable that the ink jet recording device using an ink jet recording device uses a wide format ink jet printer system and preferable to use a wide format UV ink jet printer system. The wide format ink jet printer system is a system of applying radiation at substantially the same time when an ink composition is ejected from the ink jet recording device and curing the ejected ink composition. Further, a large-sized printed matter can be prepared in a short period of time. The wide format printer is generally defined as a printer capable of printing with a width of 24 inches (61 cm) or greater. A printer with a width of 44 inches (111.7 cm) to 64 inches (162.5 cm) is the main stream, but a printer capable of printing to a maximum width of 197 inches (500 cm) is also present.

Examples of the wide format UV ink jet printer system include LuxelJet UV360GTW/XTW and UV550GTW/XTW series, Acuity LED 1600 (all manufactured by FUJIFILM Corporation), and inca SP320/SP320e/SP320S/SP320W (manufactured by Inca Digital Printers Limited).

In the method of producing a printed matter for illumination of the present invention, an ink set containing an ink composition can be preferably used. For example, an ink set obtained by combining a yellow ink composition and a cyan ink composition, a magenta ink composition, and a black ink composition can be exemplified. In order to obtain a full color image using an ink composition, it is preferable to use an ink set obtained by combining four deep color ink compositions formed of a yellow ink composition, a cyan ink composition, a magenta ink composition, and a black ink composition. Moreover, an ink set obtained by combining a group of ink compositions having five deep colors of yellow, cyan, magenta, black, and white and a group of ink compositions having colors of light cyan and light magenta is more preferable. In addition, the "deep color ink composition" indicates an ink composition whose content of a pigment exceeds 1% by weight of the entirety of the ink composition.
Moreover, in order to obtain a color image using the method of producing a printed matter for illumination of the present invention, it is preferable to overlap colors in order of colors having lower brightness using respective colors of ink compositions (ink set). Specifically, in a case of using an ink set consisting of yellow, cyan, magenta, and black ink compositions, it is preferable to provide ink compositions in order of yellow, cyan, magenta, and black on the sheet for illumination of the present invention. Further, in a case of using an ink set including at least the total of seven colors of ink compositions, which are a group of ink compositions having colors of light cyan and light magenta and a group of ink compositions having deep colors of cyan, magenta, black, white, and yellow, it is preferable to provide ink compositions in order of white, light cyan, light magenta, yellow, cyan, magenta, and black on the sheet for illumination of the present invention.
In this manner, by overlapping ink compositions in order of inks having a lower brightness, radiation can easily reach the ink in the lower portion and excellent curing sensitivity, a decrease in residual monomers, and improvement of adhesiveness can be expected. Further, during the irradiation with radiation, all colors of ink compositions can be ejected and exposed at the same time, but it is preferable to expose the ink compositions one color by one color from a viewpoint that the curing is accelerated.

Printed matter for illumination:

The printed matter for illumination of the present invention is recorded according to the method of producing the printed matter for illumination of the present invention. It is preferable that the printed matter for illumination of the present invention is disposed such that the mat layer is on the visual side. That is, a light source is provided on an image layer side formed on the easily adhesive layer of the sheet for illumination and then visually recognized from the mat layer side. By configuring the printed matter for illumination in this manner, reflection of external light can be suppressed without degrading sharpness of a printed image.
The thickness of an image layer is preferably in the range of 1 $\mu$m to 800 $\mu$m, more preferably in the range of 100 $\mu$m to 800 $\mu$m, and still more preferably in the range of 500 $\mu$m to 750 $\mu$m.
It is preferable that the width of the printed matter, which is not particularly limited, is recorded by the wide format ink jet printer system, and the width thereof is preferably in the range of 0.3 m to 5 m, more preferably in the range of 0.5 m to 4 m, and particularly preferably in the range of 1 m to 3 m. Moreover, the preferable width of the sheet for illumination or the illumination signboard of the present invention is the same as that of the printed matter for illumination of the present invention.
In a case of using the printed matter for illumination of the present invention as a printed matter for illumination, it is preferable that the printed matter for illumination of the present invention is disposed such that the opposite side of the image layer or the ink receiving layer becomes the visual side. In other words, it is preferable that a light source is provided on the image layer side formed on the ink receiving layer of the sheet for illumination of the present invention and the printed matter for illumination of the present invention is visually recognized from the support side.
It is possible to provide various kinds of functional layers on the support on the opposite side of a printing surface. Examples thereof include a scratch resistance layer described in WO09/001629, a hard coat layer with antistatic performance described in JP-A-5-186534, an anti-glare layer described in JP-A-1-46701, an anti-reflection layer described in JP-A-2001-330708, and a weather-resistant layer described in JP-A-2011-146659. Further, it is possible to laminate various films having scratch resistance and anti-glare properties. When the above-described various functional layers are provided on the opposite side of the printing surface, the printed matter for illumination of the present invention can be made into a particularly preferable form when the printed matter is visually recognized from the support side.

Illumination signboard:

It is preferable that the illumination signboard of the present invention includes a light source and a printed matter for illumination and the printed matter for illumination is arranged between two kinds of acrylic resins having excellent transparency and weather resistance.
It is preferable that the printed matter for illumination is arranged such that the visual side becomes the mat

layer, that is, the light source side becomes the easily adhesive layer.

Examples of the light source, which is not particularly limited, include a bulb, a fluorescent lamp, a light emitting diode (LED), an electroluminescent panel (ELP), one or plural cold-cathode tubes (CCFL), and a hot-cathode fluorescent lamp (HCFL).

EXAMPLES

The present invention will be described in detail with reference to Examples below. Materials, the used amounts, the rates, the contents of treatments, and the procedures of the treatments shown in Examples described below can be appropriately changed within the range not departing from the scope of the present invention. Accordingly, the range of the present invention is not limited to the examples described below.

(Example 1: preparation of sheet for illumination)

[Preparation of support]

Polyethylene terephthalate (hereinafter, referred to as "PET") resin in which a Ti compound was polycondensed as a catalyst and whose intrinsic viscosity was 0.66 was dried to have a moisture content of 50 ppm or less and dissolved in an extruder at which a set heater temperature was in the range of 280°C to 300°C. The dissolved PET resin was ejected onto a chill roll electrostatically applied from a die portion, thereby obtaining an amorphous base. The obtained amorphous base was stretched at a stretch ratio of 3.1 times in the base scanning direction and stretched at a stretch ratio of 3.8 times in the width direction, thereby obtaining a PET support having a thickness of 250 μm.

[Preparation of easily adhesive layer]

After a corona discharge treatment was performed on a PET support under the condition of 730 $J/m^2$, the coronatreated surface side was coated with a coating liquid A described below according to a bar coating method. In addition, the surface was dried at a temperature of 145°C for 1 minute, a first adhesive layer was provided on one surface of the PET support, and the corona discharge treatment was performed on the surface of the first adhesive layer under the condition of 288 $J/m^2$. The first adhesive layer was coated with the coating liquid B described below according to the bar coating method and the layer was dried at a temperature of 145°C for 1 minute, thereby preparing an easily adhesive layer film with the second adhesive layer formed on the first adhesive layer.

(Coating liquid A)

The composition of the coating liquid A is as follows.

Acrylic acid ester copolymer 63.4 parts by mass
(JURYMER ET-410, manufactured by TOAGOSEI CO., LTD., solid content: 30%)
Polyolefin 95.1 parts by mass
(Arrow Base SE-1013N, manufactured by Unitika Ltd., solid content: 20% by mass)
Crosslinking agent (carbodiimide-based compound) 31.5 parts by mass
(Carbodilite V-02-L2, manufactured by Nisshinbo Holdings Inc., solid content: 40%)
Surfactant A 16.7 parts by mass
(Naroacty CL-95, manufactured by Sanyo Chemical Industries Co., Ltd., 1% of aqueous solution)
Surfactant B 6.9 parts by mass
(RAPISOL B-90, manufactured by NOR CORPORATION, 1% of aqueous solution)
Polystyrene latex water dispersion liquid 1.2 parts by mass
(Nippol UFN1008, manufactured by ZEON CORPORATION)
Preservative 0.8 parts by mass
(1,2-benzothiazoline-3-one, manufactured by DAITO CHEMICAL CO., LTD., solid content: 3.5% methanol solvent)
Distilled water α parts by mass
(α: the amount thereof was adjusted such that the entirety of the coating liquid A became 1000 parts by mass)
Water dispersion liquid of polyester 77.6 parts by mass
(Plascoat Z592, manufactured by GOO CHEMICAL CO., LTD., solid content: 25%)

(Coating liquid B)

The composition of the coating liquid B is as follows.

| | |
|---|---|
| Water dispersion liquid of polyester | 77.6 parts by mass |
| (Plascoat Z592, manufactured by GOO CHEMICAL CO., LTD., solid content: 25%) | |
| Polyurethane resin | 51.1 parts by mass |
| (Superflex 150HS, manufactured by DKS Co., Ltd., solid content: 38%) | |
| Crosslinking agent (oxazoline compound) | 15.3 parts by mass |
| (EPOCROS 2020E, manufactured by NIPPON SHOKUBAI CO., LTD., solid content: 40%) | |
| Surfactant A | 29.7 parts by mass |
| (Naroacty CL-95, manufactured by Sanyo Chemical Industries Co., Ltd., 1% aqueous solution) | |
| Surfactant B | 12.3 parts by mass |
| (RAPISOL B-90, manufactured by NOR CORPORATION, 1% aqueous solution) | |
| Lubricant | 1.8 parts by mass |
| (carnauba wax dispersion CELLOSOL 524, manufactured by CHUKYO YUSHI CO., LTD., solid content: 30%) | |
| Preservative | 0.7 parts by mass |
| (1,2-benzothiazoline-3-one, manufactured by DAITO CHEMICAL CO., LTD., solid content: 3.5% methanol solvent) | |
| Distilled water | $\alpha$ parts by mass |
| ($\alpha$: the amount thereof was adjusted such that the entirety of the coating liquid B became 1000 parts by mass) | |

[Preparation of intermediate layer]

An easily adhesive layer was formed on one surface of a support, a corona discharge treatment was performed on the other surface thereof under the condition of 310 J/m$^2$, and then a coating liquid for an intermediate layer formed of the following composition was applied according to the bar coating method. The coating amount was adjusted to be 8.4 cm$^3$/m$^2$ and the surface was dried at a temperature of 145°C for 1 minute. In this manner, an intermediate layer having an average film thickness of approximately 0.1 $\mu$m was formed on the opposite side of the surface on which the easily adhesive layer was formed.

[Coating liquid for intermediate layer]

| | |
|---|---|
| Self-crosslinking polyurethane resin binder | 31.5 parts by mass |
| (Takelac WS-5100, manufactured by Mitsui Chemicals, Inc., solid content: 30%) | |
| Tin dioxide-antimony compound needle-shaped metal oxide water dispersion | 43.7 parts by mass |
| (FS-10D, manufactured by Ishihara Sangyo Co., Ltd., solid content: 20%) | |
| Surfactant C | 2.1 parts by mass |
| (10% aqueous solution of Sandeddo BL, manufactured by Sanyo Chemical Industries, Ltd., anionic) | |
| Surfactant A | 21.0 parts by mass |
| (1% aqueous solution of Naroacty CL-95, manufactured by Sanyo Chemical Industries, Ltd., nonionic) | |
| Distilled water | $\alpha$ parts by mass |
| ($\alpha$: the amount thereof was adjusted such that the entirety of the coating liquid B became 1000 parts by mass) | |

[Mat layer]

Subsequently, an intermediate layer was coated with a coating liquid for a mat layer formed of the following composition according to the bar coating method after a corona discharge treatment was performed under the condition of 200 J/m$^2$. The coating amount was adjusted to be 13.8 cm$^3$/m$^2$ and the layer was dried at a temperature of 145°C for 1 minute. In this manner, a mat layer having an average film thickness of approximately 0.85 $\mu$m was formed.

[Coating liquid for mat layer]

| | |
|---|---|
| Acetic acid aqueous solution | 402.0 parts by mass |
| (manufactured by Daicel Corporation, 1% aqueous solution of industrial acetic acid) | |
| 3-glycidoxy propyl triethoxysilane | 110.0 parts by mass |
| (KBE-403, manufactured by Shin-Etsu Chemical Co., Ltd.) | |

(continued)

| | |
|---|---|
| Tetraethoxysilane | 127.6 parts by mass |
| (KBE-04, manufactured by Shin-Etsu Chemical Co., Ltd.) | |
| Curing agent | 1.3 parts by mass |
| (Aluminum chelate A(W), manufactured by Kawasaki Fine Chemicals Co., Ltd.) | |
| Surfactant C | 14.7 parts by mass |
| (10% aqueous solution of Sandeddo BL, manufactured by Sanyo Chemical Industries, Ltd., anionic) | |
| Surfactant A | 40.9 parts by mass |
| (1% aqueous solution of Naroacty CL-95, manufactured by Sanyo Chemical Industries, Ltd., nonionic) | |
| Acrylic resin fine particles | 9.2 parts by mass |
| (MX-150, manufactured by Soken Chemical & Engineering Co., Ltd., average particle diameter: 1.5 μm) | |
| Acrylic resin fine particles | 9.2 parts by mass |
| (MX-80H3WT, manufactured by Soken Chemical & Engineering Co., Ltd., average particle diameter: 0.8 μm) | |
| Water dispersion liquid of polystyrene resin fine particles | 6.9 parts by mass |
| (Nippol UFN1008, manufactured by ZEON CORPORATION, solid content: 20%, average particle diameter: 1.9 μm) | |
| Distilled water | α parts by mass |
| (α: the amount thereof was adjusted such that the entirety of the coating liquid B became 1000 parts by mass) | |

The coating liquid for a mat layer was prepared using the following method.

3-glycidoxy propyl triethoxysilane was added dropwise to an acetic acid aqueous solution for 3 minutes while the acetic acid aqueous solution was violently stirred in a thermostatic chamber whose temperature was 25°C. After the solution was stirred for 1 hour, tetraethoxysilane was added for 5 minutes while the acetic acid aqueous solution was strongly stirred in the thermostatic chamber whose temperature was 30°C, and then the solution was stirred for 2 hours. Further, the solution was cooled to 10°C for 1 hour. The aqueous solution obtained in this manner was set to an aqueous solution X.

Further, a curing agent, a surfactant, distilled water, and resin fine particles were added thereto and subjected to ultrasonic dispersion for 5 minutes. The particle dispersion liquid obtained in this manner was set to an aqueous solution Y. The aqueous solution Y, a surfactant, and distilled water were sequentially added to the aqueous solution X, and then the solution was cooled to 10°C.

(Examples 2 to 8)

A part of the compositions of a coating liquid for a mat layer and a coating liquid for an intermediate layer were changed, the intermediate layer was coated with the coating liquids in the same method as that of Example 1 to prepare sheets for illumination, and the resultants were set to the sheets for illumination of Examples 2 to 8.

The compositions of the coating liquids for a mat layer and coating liquids for an intermediate layer used for production of sheets for illumination of Examples 1 to 8 are listed in Table 1.

Table 1

| | Configuration of coating liquid (unit parts by mass) | Example 1 | Example 2 | Example 3 | Example 4 | Example 5 | Example 6 | Example 7 | Example 8 |
|---|---|---|---|---|---|---|---|---|---|
| Coating liquid for intermediate layer | Self-crosslinking polyurethane resin binder | 31.5 | 31.5 | 31.5 | 31.5 | 31.5 | 31.5 | 31.5 | 31.5 |
| | Tin dioxide-antimony compound needle-shaped metal oxide water dispersion | 43.7 | 43.7 | 43.7 | 43.7 | 43.7 | 43.7 | 43.7 | 43.7 |
| | Surfactant C | 2.1 | 2.1 | 2.1 | 2.1 | 2.1 | 2.1 | 2.1 | 2.1 |
| | SurfactantA | 21.0 | 21.0 | 21.0 | 21.0 | 21.0 | 21.0 | 21.0 | 21 |
| | Distilled water | 901.7 | 901.7 | 901.7 | 901.7 | 901.7 | 901.7 | 901.7 | 901.7 |
| Coating liquid for mat layer | Acetic acid aqueous solution | 402.0 | 402.0 | 402.0 | 402.0 | 402.0 | 381.9 | 337.7 | 409.9 |
| | 3-glycidoxy propyl triethoxysilane | 135.1 | 110.0 | 110.0 | 160.4 | 65.2 | 104.5 | 92.4 | 112.2 |
| | 3-glycidoxy propyl methyl diethoxysilane | 0.0 | 0.0 | 0.0 | 0.0 | 0.0 | 0.0 | 0.0 | 0.0 |
| | Tetraethoxysilane | 89.6 | 127.6 | 127.6 | 51.4 | 195.3 | 121.3 | 107.2 | 130.1 |
| | Tetramethoxysilane | 0.0 | 0.0 | 0.0 | 0.0 | 0.0 | 0.0 | 0.0 | 0.0 |
| | Colloidal silica | 0.0 | 0.0 | 0.0 | 0.0 | 0.0 | 33.9 | 108.5 | 0.0 |
| | Curing agent | 1.3 | 1.3 | 1.3 | 1.3 | 1.3 | 1.3 | 1.3 | 0.9 |
| | Surfactant C | 14.7 | 14.7 | 14.7 | 14.7 | 14.7 | 14.7 | 14.7 | 9.8 |
| | Surfactant A | 40.9 | 40.9 | 40.9 | 40.9 | 40.9 | 40.9 | 40.9 | 27.3 |
| | Acrylic resin fine particles (average particle diameter: 1.5 μm) | 3.3 | 3.3 | 1.4 | 3.3 | 3.3 | 1.4 | 1.4 | 6.5 |
| | Acrylic resin fine particles (average particle diameter: 0.8 μm) | 0.0 | 0.0 | 1.4 | 0.0 | 0.0 | 1.4 | 1.4 | 0.0 |
| | Water dispersion of polystyrene resin fine particles | 0.0 | 0.0 | 6.9 | 0.0 | 0.0 | 6.9 | 6.9 | 0.0 |
| | Distilled water | 313.1 | 300.2 | 293.8 | 326.0 | 277.3 | 291.9 | 287.7 | 303.4 |

(Example 9)

A sheet for illumination of Example 9 was prepared in the same manner as that of Example 1 except that a mat layer was prepared as follows.

[Preparation of mat layer]

An intermediate layer was coated with a coating liquid for a mat layer formed of the following composition according to the bar coating method. The coating amount thereof was adjusted to 3.5 $cm^3/m^2$, the layer was dried at a temperature of 60°C for 1 minute, UV light (metal halide lamp UVL-1500M2, manufactured by USHIO INC.) was applied from the coating surface side under the condition of 2000 $mJ/cm^2$, and then the resin was cured. In this manner, a mat layer having an average film thickness of approximately 0.8 μm was formed.

[Coating liquid for mat layer]

| | |
|---|---|
| MEK (methyl ethyl ketone) | 669.7 parts by mass |
| Multifunctional acrylic monomer | 314.5 parts by mass |
| (KAYARAD DPCA 20, manufactured by Nippon Kayaku Co., Ltd.) | |
| Acrylic resin fine particles | 6.1 parts by mass |
| (MX-180, manufactured by Soken Chemical & Engineering Co., Ltd., average particle diameter: 1.8 μm) | |
| UV curing resin | 9.7 parts by mass |
| (Irg 184, manufactured by BASF Japan Ltd.) | |

(Comparative Examples 1 to 6)

A part of the compositions of a coating liquid for a mat layer and a coating liquid for an intermediate layer were changed, and the intermediate layer was coated with the coating liquids in the same method as that of Example 1 to prepare sheets for illumination of Comparative Examples 1 to 6. The compositions of the coating liquid for a mat layer and the coating liquid for an intermediate layer are listed in Table 2.

Table 2

| | Configuration of coating liquid (unit: parts by mass) | Comparative Example 1 | Comparative Example 2 | Comparative Example 3 | Comparative Example 4 | Comparative Example 5 | Comparative Example 6 |
|---|---|---|---|---|---|---|---|
| Coating liquid for Intermediate layer | Self-crosslinking polyurethane resin binder | 31.5 | 31.5 | 31.5 | 31.5 | 31.5 | 31.5 |
| | Tin dioxide-antimony compound needle-shaped metal oxide water dispersion | 43.7 | 43.7 | 43.7 | 43.7 | 43.7 | 43.7 |
| | Surfactant C | 2.1 | 2.1 | 2.1 | 2.1 | 2.1 | 2.1 |
| | Surfactant A | 21 | 21 | 21 | 21 | 2.1 | 21 |
| | Distilled water | 901.7 | 901.7 | 901.7 | 901.7 | 901.7 | 901.7 |
| Coating liquid for mat layer | Acetic acid aqueous solution | 402 | 402 | 269.34 | 140.7 | 140.7 | 402 |
| | 3-glycidoxy propyl triethoxysilane | 194.4 | 0.0 | 73.7 | 38.5 | 38.5 | 110 |
| | Tetraethoxysilane | 0.0 | 294.0 | 85.5 | 44.7 | 44.7 | 127.6 |
| | Colloidal silica | 0.0 | 0.0 | 223.8 | 440.8 | 440.8 | 0.0 |
| | Caprolactone-modified dipentaerythritol hexaacrylate | 0.0 | 0.0 | 0.0 | 0.0 | 0.0 | 0.0 |
| | Urethane acrylate | 0.0 | 0.0 | 0.0 | 0.0 | 0.0 | 0.0 |
| | Curing agent | 1.3 | 1.3 | 1.3 | 1.3 | 1.3 | 0.7 |
| | 1-hydroxy cyclohexyl phenyl ketone | 0.0 | 0.0 | 0.0 | 0.0 | 0.0 | 0.0 |
| | Surfactant C | 14.7 | 14.7 | 14.7 | 14.7 | 14.7 | 7.4 |
| | Surfactant A | 40.9 | 40.9 | 40.9 | 40.9 | 40.9 | 20.5 |
| | Acrylic resin fine particles (average particle diameter: 8.0 μm) | 0.0 | 0.0 | 0.0 | 0.0 | 0.0 | 0.0 |
| | Acrylic resin fine particles (average particle diameter: 1.5 μm) | 3.3 | 3.3 | 1.4 | 1.4 | 2.4 | 0.7 |
| | Acrylic resin fine particles (average particle diameter: 0.8 μm) | 0.0 | 0.0 | 1.4 | 1.4 | 2.4 | 0.7 |
| | Water dispersion of polystyrene resin fine particles | 0.0 | 0.0 | 6.9 | 6.9 | 12.1 | 3.5 |

(continued)

| | Configuration of coating liquid (unit: parts by mass) | Comparative Example 1 | Comparative Example 2 | Comparative Example 3 | Comparative Example 4 | Comparative Example 5 | Comparative Example 6 |
|---|---|---|---|---|---|---|---|
| | MEK | 0.0 | 0.0 | 0.0 | 0.0 | 0.0 | 0.0 |
| | MIBK | 0.0 | 0.0 | 0.0 | 0.0 | 0.0 | 0.0 |
| | Distilled water | 343.4 | 243.8 | 281.1 | 268.8 | 261.6 | 327.1 |

(Comparative Examples 7 to 9)

A commercially available sheet for illumination "VIEWFUL UV TP-188" (manufactured by Kimoto, Inc.) was used as the sheet for illumination of Comparative Example 7, a commercially available sheet for illumination "VIEWFUL UV MT-188" (manufactured by Kimoto, Inc.) was used as the sheet for illumination of Comparative Example 8, and a commercially available sheet for illumination "VIEWFUL UV NH-308" (manufactured by Kimoto, Inc.) was used as the sheet for illumination of Comparative Example 9.

(Evaluation)

Respective items described below were evaluated using the sheets for illumination of Examples 1 to 9 and Comparative Examples 1 to 9. The results are listed in Table 3.

[Haze value]

The haze was measured in conformity with JIS-K-7105 using a haze meter (NDH-5000, manufactured by NIPPON DENSHOKU INDUSTRIES Co., LTD.) in the forms of the sheets for illumination.

[Average film thickness]

The average film thickness was acquired by capturing a sectional image of a film using an SEM at scores to the extent that the average film thickness can be measured without variation of the film thickness, measuring the thicknesses of the respective portions, and averaging the value thereof.

[Ten-point average roughness]

Ten-point average roughness (Rz) was set in conformity with JIS B-0601 (1994) using a tracer type surface roughness meter "Handy Surf E-35B" (manufactured by TOKYO SEIMITSU CO., LTD.) and the value derived by the surface roughness meter was employed.

[Pencil hardness]

Evaluation was performed on the coating surface side of the mat layer in conformity with JIS (K-5600-5-4).

[Method of evaluating sharpness of transmission image]

Evaluation was performed using an image clarity measuring device ICM-1DP (manufactured by Suga Test Instruments Co., Ltd.) in conformity with JIS (K-7105). The sharpness of a transmission image was measured by allowing light to be incident from the coating surface side of the mat layer.

[Method of measuring surface resistivity]

Surface resistances SR ($\Omega$/sq) of the sheets for illumination obtained in respective Examples and respective Comparative Examples were measured based on the method described in the resistivity of JIS-K-6911-1995. After a laminated film for each prism sheet was left alone in an environment of a temperature of 23°C and a relative humidity of 65% for 3 hours and then humidified, the measurement of the surface resistance SR ($\Omega$/sq) was performed in an environment which was the same as that described above using a resistivity chamber (12702A, manufactured by ADE Corporation) and a digital ultra-high resistance and micro current meter (8340A, manufactured by ADE Corporation).

[Preparation of printed matter for illumination]

As an ink, a solventless radiation-curable ink (manufactured by FUJIFILM Speciality Ink System Limited, Product No. UVIJET KO 021 White, UVIJET KO 004 Black, UVIJET KO 215 Cyan, UVIJET KO 867 Magenta, or UVIJET KO 052 Yellow) was used.

As a printer, "wide format UV ink jet press LuxelJet UV550GTW (manufactured by FUJIFILM Corporation)" was used and a color image was printed two times (under the conditions of a wavelength of 365 nm to 405 nm and a print speed of 22 $m^2$/hr), thereby obtaining a printed matter (sheet for illumination) with dimensions of approximately 2 m (width) $\times$ 1.5 m. The thickness of an image layer after drying was in the range of 500 $\mu$m to 720 $\mu$m.

[Evaluation of reflection of external light]

The sheet for illumination in which an image was output according to the above-described method was disposed in a position on an evaluation base such that a fluorescent lamp on the ceiling was reflected on the sheet from an angle of a 30° direction and the reflection of the fluorescent lamp was visually determined based on the following A to E.

A to C were determined as performance contents.

A: The contour of a fluorescent lamp image was not seen.
B: Most of the contour of the fluorescent lamp image was not seen.
C: The contour of the fluorescent lamp image was slightly seen, but a printed image could be clearly recognized.
D: The contour of the fluorescent lamp image was quite clearly seen, but a printed image was not clearly seen.
E: The contour of the fluorescent lamp image was reflected and a printed image was not recognized.

[Evaluation of sharpness of printed image]

The sharpness of a printed image was visually determined based on the following A to E using the sheet for illumination in which the above-described image was output as a diffusion light source which was put on an evaluation base and on which the contour of a ceiling lamp was not reflected.

A and B were determined as performance contents.

A: The color of a printed image was clearly seen.
B: The color of the black portion in the printed image was slightly whitish.
C: Each color in the printed image was slightly whitish.
D: The whiteness in the black portion of the printed image was clearly seen.
E: The entire printed image became whitish and the contrast thereof was decreased.

Table 3

| | Molar ratio of tetrafunctional to tri(bi)functional alkoxysilane | Content of inorganic fine particles (solid content excluding matting agent) | Water-based or solvent-based | Matting agent average particle diameter | Coating film thickness of resin film | Surface resistivity of matting layer | Sharpness of transmission Image with 2 mm interval (transmissive image clarity) | Image clarity of reflection at 60° with 2 mm interval | Transmission/image clarity of reflection at 60° | Haze value | Pencil hardness | Reflection of external light | Sharpness of printed image |
|---|---|---|---|---|---|---|---|---|---|---|---|---|---|
| | - | % | - | μm | μm | Ω/sq | % | % | | % | - | - | - |
| Example 1 | 47/53 | 0 | Water | 1.5 | 0.85 | $6.3\times10^{10}$ | 52 | 11 | 4.7 | 11 | H | A | A |
| Example 2 | 61/39 | 0 | Water | 1.5 | 0.85 | $2.0\times10^{10}$ | 55.1 | 12.1 | 4.6 | 10 | H | A | A |
| Example 3 | 61/39 | 0 | Water | 1.4 | 0.85 | $3.2\times10^{10}$ | 57.3 | 10.9 | 5.3 | 12 | H | A | A |
| Example 4 | 30/70 | 0 | Water | 1.5 | 0.85 | $1.6\times10^{10}$ | 55 | 14 | 3.9 | 12 | F | A | A |
| Example 5 | 80/20 | 0 | Water | 1.5 | 0.85 | $2.5\text{x}10^{10}$ | 63 | 25 | 2.5 | 13 | 2H | B | A |
| Example 6 | 61/39 | 5 | Water | 1.4 | 0.85 | $1.6\times10^{10}$ | 58.2 | 21.1 | 2.8 | 13 | H | B | A |
| Example 7 | 61/39 | 16 | Water | 1.4 | 0.85 | $3.2\times10^{10}$ | 59.1 | 24 | 2.5 | 14 | H | B | A |
| Example 8 | 61/39 | 0 | Water | 1.5 | 1.3 | $7.9\times10^{9}$ | 72 | 34 | 2.1 | 24 | 2H | C | B |
| Example 9 | - | - | Solvent-based | 1.5 | 0.8 | $1.6\times10^{11}$ | 35.9 | 9.5 | 3.8 | 9 | H | A | A |
| Comparative Example 1 | 0/100 | 0 | Water | 1.5 | 0.85 | - | - | - | - | - | - | - | - |
| Comparative Example 2 | 100/0 | 0 | Water | 1.5 | 0.85 | $6.3\times10^{10}$ | 78.6 | 68.9 | 1.1 | 21 | 2H | D | B |
| Comparative Example 3 | 61/39 | 33 | Water | 1.4 | 0.85 | $6.3\times10^{10}$ | 83.4 | 65.4 | 1.3 | 16 | H | D | B |
| Comparative Example 4 | 61/39 | 65 | Water | 1.4 | 0.85 | $6.3\text{x}10^{10}$ | 95.7 | 92.4 | 1.0 | 13 | 2H | E | B |

(continued)

| | Molar ratio of tetrafunctional to tri(bi)functional alkoxysilane | Content of inorganic fine particles (solid content excluding matting agent) | Water-based or solvent-based | Matting agent average particle diameter | Coating film thickness of resin film | Surface resistivity of matting layer | Sharpness of transmission Image with 2 mm interval (transmissive image clarity) | Image clarity of reflection at 60° with 2 mm interval | Transmission/image clarity of reflection at 60° | Haze value | Pencil hardness | Reflection of external light | Sharpness of printed image |
|---|---|---|---|---|---|---|---|---|---|---|---|---|---|
| | - | % | - | μm | μm | Ω/sq | % | % | | % | - | - | - |
| Comparative Example 5 | 61/39 | 65 | Water | 1.4 | 0.85 | $6.3\times10^{10}$ | 87.1 | 78.5 | 1.1 | 29 | H | D | C |
| Comparative Example 6 | 61/39 | 0 | Water | 1.4 | 1.7 | $6.3\times10^{10}$ | 92.1 | 88.6 | 1.0 | 4 | 2H | E | A |
| Comparative Example 7 | - | - | - | - | - | $1.3\times10^{15}$ | 96.5 | 96.5 | 1.0 | 1.0 | HB | E | A |
| Comparative Example 8 | - | - | - | - | - | $7.0\times10^{12}$ | 13.8 | 12.6 | 1.1 | 59.7 | H | A | D |
| Comparative Example 9 | - | - | - | - | - | $1.1\times10^{12}$ | 0 | 38.6 | 0.0 | 99.6 | H | A | E |

From Table 3, it is understood that reflection of external light is suppressed without degrading the sharpness of a printed image in Examples 1 to 9 in which the relationship between the transmission value of image clarity in comb teeth with an interval of 2 mm and the image clarity value of reflection at 60° satisfies a predetermined expression. Meanwhile, in Comparative Examples 1 to 9 which do not satisfy the above-described predetermined expression, one of the sharpness of a printed image and the reflection of external light is degraded compared to Examples 1 to 9 and it is understood that both of the sharpness of a printed image and the suppression of reflection of external light cannot be achieved at the same time.

[Preparation of illumination signboard]

An illumination signboard was prepared by arranging a milky white acrylic plate having a thickness of 2 mm, the printed matter for illumination prepared and evaluated according to the above-described method, and a colorless transparent acrylic plate having a thickness of 2 mm in this order from a light source side using a box which has 20 W of six fluorescent lamps arranged in parallel and has inner dimensions of 1100 mm (height) × 1300 mm (width) × 120 mm (depth). In addition, the printed matter for illumination was arranged such that the mat layer side was directed to the colorless transparent acrylic plate side.

REFERENCE SIGNS LIST

| | |
|---|---|
| 10, 20: | Sheet for illumination |
| 11: | Mat layer |
| 11a: | Intermediate layer |
| 12: | Support |
| 13: | Easily adhesive layer |
| 15: | Matting agent |
| 101: | Detector |
| 102: | Light |
| 103: | Normal of sheet for illumination |

## Claims

1. A sheet for illumination including:

   a support;
   a mat layer which is arranged on one surface of the support; and
   an easily-adhesive layer which is arranged on the other surface of the support,
   in which
   a transmission value in percentage of image clarity in comb teeth with an interval of 2 mm and an image clarity value in percentage of reflection at 60° in comb teeth with an interval of 2 mm when an angle between a traveling direction of light and a normal of a sheet is set to be 60° satisfy the following relationship:

   Transmission value in percentage of image clarity/image clarity value in percentage of reflection at 60° ≥ 2.

2. The sheet for illumination according to Claim 1, in which a mat layer contains a silicon-containing resin, a matting agent, and a surfactant.

3. The sheet for illumination according to Claim 2, in which the silicon-containing resin contains a condensate obtained by condensing a silane coupling agent.

4. The sheet for illumination according to Claim 3, in which the silane coupling agent contains a tetrafunctional alkoxysilane and a trifunctional or bifunctional alkoxysilane, and a molar ratio of the tetrafunctional alkoxysilane to the

trifunctional or bifunctional alkoxysilane is in a range of 25:75 to 85:15.

**5.** The sheet for illumination according to any one of Claims 2 to 4, which satisfies the following inequation:

$$t < r$$

in which r is a volume average particle diameter of the matting agent and t is an average film thickness of the mat layer.

**6.** The sheet for illumination according to any one of Claims 1 to 5, in which the mat layer contains inorganic fine particles in an amount of 20% or less.

**7.** The sheet for illumination according to any one of Claims 3 to 6, in which the silane coupling agent contains a tetrafunctional alkoxysilane and a trifunctional alkoxysilane, and a molar ratio of the tetrafunctional alkoxysilane to the trifunctional alkoxysilane is in a range of 25:75 to 85:15.

**8.** The sheet for illumination according to any one of Claims 4 to 7, in which the trifunctional alkoxysilane is an alkoxysilane including an epoxy group.

**9.** The sheet for illumination according to any one of Claims 4 to 8, in which the trifunctional alkoxysilane is 3-glycidoxypropyltriethoxysilane.

**10.** The sheet for illumination according to Claim 1, in which the mat layer contains a matting agent having a particle diameter of 0.4 μm to 3 μm and a binder, and a refractive index difference between the matting agent and the binder is 0.1 or less.

**11.** The sheet for illumination according to any one of Claims 1 to 10, further including an intermediate layer between the support and the mat layer.

**12.** The sheet for illumination according to any one of Claims 1 to 11, which has a haze value of 3% to 35%.

**13.** The sheet for illumination according to any one of Claims 1 to 12, in which the mat layer has a pencil hardness of F or higher.

**14.** The sheet for illumination according to any one of Claims 1 to 13, in which the mat layer has a surface resistivity at a temperature of 23°C and at a relative humidity of 65% of $1.0 \times 10^{12}$ Ω/sq or less.

**15.** The sheet for illumination according to any one of Claims 1 to 14, in which the mat layer is disposed on a visual side.

**16.** A method of producing a printed matter for illumination including a process of ejecting an ink composition on the sheet for illumination according to any one of Claims 1 to 15 using an ink jet recording device, and a process of irradiating the ejected ink composition with radiation and curing the ink composition.

**17.** The method of producing a printed matter for illumination according to Claim 16, in which the ink composition is a radiation-curable ink composition.

**18.** The method of producing a printed matter for illumination according to Claim 17, in which the ink composition is a solventless radiation-curable ink composition.

**19.** The method of producing a printed matter for illumination according to any one of Claims 16 to 18, in which the ink jet recording device is a wide format ink jet printer system.

**20.** A printed matter for illumination which is produced by the method of producing a printed matter for illumination according to any one of Claims 16 to 19.

**21.** The printed matter for illumination according to Claim 20 which is disposed such that the mat layer of the sheet for illumination according to any one of Claims 1 to 15 is on a visual side.

**22.** An illumination signboard including the printed matter for illumination according to Claim 20 or 21 and a light source.

**23.** The illumination signboard according to Claim 22 which is disposed such that the mat layer of the sheet for illumination according to any one of Claims 1 to 15 is on a visual side.

Fig. 1

(a)

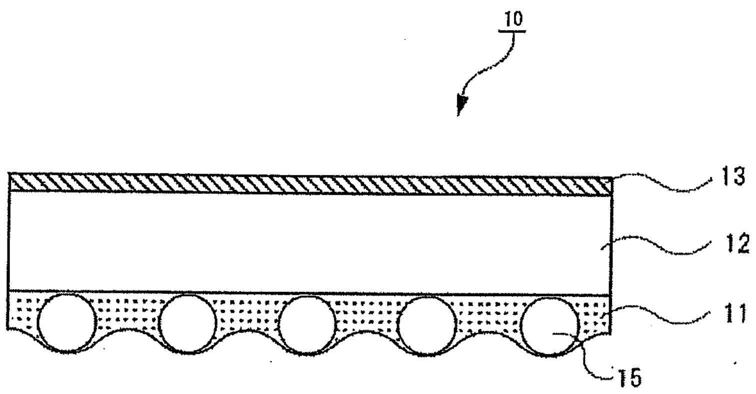


(b)

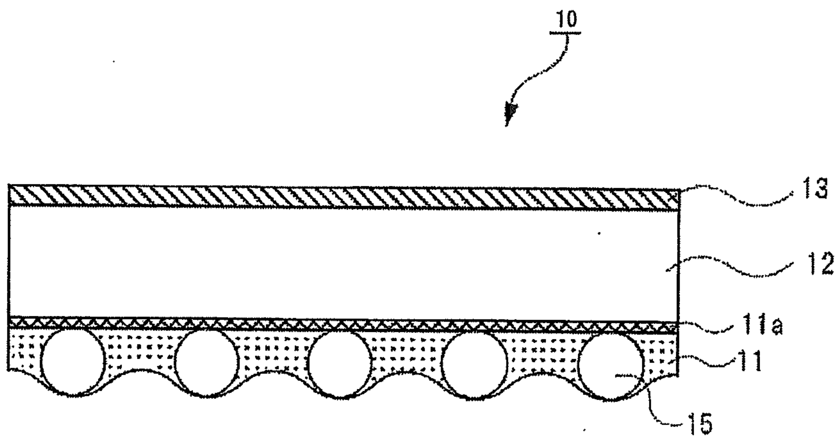

**INTERNATIONAL SEARCH REPORT**

International application No.
PCT/JP2014/051818

A. CLASSIFICATION OF SUBJECT MATTER
*G02B5/02*(2006.01)i, *B32B7/02*(2006.01)i, *B32B27/00*(2006.01)i, *B41M5/00*(2006.01)i, *G09F13/04*(2006.01)i

According to International Patent Classification (IPC) or to both national classification and IPC

B. FIELDS SEARCHED

Minimum documentation searched (classification system followed by classification symbols)
G02B5/02, B32B7/02, B32B27/00, B41M5/00, G09F13/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2002-98804 A (Fuji Photo Film Co., Ltd.), 05 April 2002 (05.04.2002), paragraphs [0015], [0017], [0024]; fig. 1 (Family: none) | 1-23 |
| Y | JP 2005-4163 A (Fuji Photo Film Co., Ltd.), 06 January 2005 (06.01.2005), paragraphs [0024], [0067] to [0074], [0087], [0089] & US 2006/0227695 A1 | 1-23 |
| Y | JP 2008-158156 A (Konica Minolta Opto, Inc.), 10 July 2008 (10.07.2008), paragraphs [0065] to [0071] (Family: none) | 1-23 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 05 March, 2014 (05.03.14) | 18 March, 2014 (18.03.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2014/051818

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2008-62562 A (Kimoto Co., Ltd.), 21 March 2008 (21.03.2008), paragraphs [0002], [0008] (Family: none) | 1-23 |
| Y | JP 2006-145910 A (Sekisui Chemical Co., Ltd.), 08 June 2006 (08.06.2006), paragraph [0012] (Family: none) | 1-23 |
| Y | JP 2011-186066 A (Asahi Kasei Corp.), 22 September 2011 (22.09.2011), paragraphs [0002], [0004], [0028] (Family: none) | 1-23 |
| Y | JP 2004-34399 A (Nitto Denko Corp.), 05 February 2004 (05.02.2004), paragraph [0019] (Family: none) | 9,15-23 |
| Y | JP 2010-59236 A (Nippon Paint Co., Ltd.), 18 March 2010 (18.03.2010), paragraphs [0115], [0127] & KR 10-2010-0027075 A & CN 101928481 A | 12,14-23 |
| Y | JP 11-273433 A (Kimoto Co., Ltd.), 08 October 1999 (08.10.1999), paragraph [0042] (Family: none) | 15-23 |
| Y | JP 2004-131725 A (Seiren Co., Ltd.), 30 April 2004 (30.04.2004), paragraph [0044] & US 2004/0024078 A1 | 15-23 |
| Y | JP 2010-165038 A (Fujifilm Corp.), 29 July 2010 (29.07.2010), paragraph [0001] (Family: none) | 15-23 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 6059107 A
- JP 11273433 A
- JP 2012189978 A
- JP 2010047015 A
- JP 5214280 A
- JP 2004131725 A
- JP 2009299057 A
- US 6084250 A
- JP 60132767 A
- JP 11054415 A
- WO 09001629 A
- JP 5186534 A
- JP 1046701 A
- JP 2001330708 A
- JP 2011146659 A


### Non-patent literature cited in the description


- **EIICHIRO TAKIYAMA.** Handbook of Polyester Resin. NIKKAN KOGYO SHIMBUN, LTD, 1988
- Handbook of Polyurethane. NIKKAN KOGYO SHIMBUN, LTD, 1987